# EUROPÄISCHE PATENTSCHRIFT

(11) **EP 4 657 287 B1**
(45) Veröffentlichungstag und Bekanntmachung des Hinweises auf die Patenterteilung: **29.07.2026**
(21) Anmeldenummer: 25169433.7
(22) Anmeldetag: 09.04.2025
(51) Int. Cl.: G06F 21/32, G06F 21/34, G06F 21/45, H04L 9/32

(54) **BEREITSTELLEN EINES DIGITALEN ID-NACHWEISES**
PROVIDING A DIGITAL ID DISCOVERY
FOURNITURE D'UNE PREUVE D'ID NUMÉRIQUE

(30) Priorität: 29.05.2024 DE 102024115072
(43) Veröffentlichungstag der Anmeldung: 03.12.2025
(73) Patentinhaber: Bundesdruckerei GmbH, 10969 Berlin (DE)
(72) Erfinder: Bastian, Paul, 10243 Berlin (DE); Kraus, Micha, 79111 Freiburg (DE); Kreusch, Markus, 14612 Falkensee (DE); Fischer, Jörg, 10317 Berlin (DE)
(74) Vertreter: Richardt Patentanwälte PartG mbB

(56) Entgegenhaltungen:
- EP-B1- 2 912 595
- DE-A1- 102021 110 142
- ISO/IEC JTC1 SC17 WG4: "ISO_IEC_DIS_23220", vol. TC ESI Electronic Signatures and Infrastructures, 12 January 2022 (2022-01-12), pages 1 - 47, XP014419305, Retrieved from the Internet <URL:ftp://docbox.etsi.org/ESI/ESI/05-CONTRIBUTIONS/2022/ESI(22)076009_ISO_IEC_DIS_23220.zip ISO_IEC_DIS_23220-1-Character_PDF_document(en).pdf> [retrieved on 20220112]

## Beschreibung

### GEBIET DER TECHNIK

Die Erfindung betrifft das Gebiet digitaler Identitätsnachweise, im Folgenden auch als digitale ID-Nachweise bezeichnet. Genauer gesagt betrifft die Erfindung ein Verfahren zum Bereitstellen eines digitalen ID-Nachweises sowie ein System zum Bereitstellen eines solchen digitalen ID-Nachweises.

### STAND DER TECHNIK

In einer zunehmend vernetzten Welt erlangen sichere digitale Identitäten sowie verifizierbare und damit vertrauenswürdige digitale Nachweise entsprechender Identitäten immer mehr an Bedeutung. Digitale Identitäten sind beispielsweise eine Voraussetzung zum effektiven Gestalten von digitalen Geschäftsprozessen, digitalen Arbeitsabläufen und technischen Systemen. Die Dokumente DE 102021110142 und EP 2 912 595 sind Teil des technologischen Hintergrundes.

### ZUSAMMENFASSUNG

Es ist eine Aufgabe der Erfindung, ein verbessertes Verfahren und ein verbessertes System zum Bereitstellen eines digitalen ID-Nachweises zu schaffen. Die der Erfindung zugrunde liegende Aufgabe wird durch die Merkmale der unabhängigen Ansprüche gelöst. Vorteilhafte exemplarische Implementierungen werden in den abhängigen Ansprüchen angegeben.

In einem Aspekt ist ein Verfahren zum Bereitstellen eines digitalen ID-Nachweises unter Verwendung eines elektronischen ID-Tokens offenbart. Der ID-Token umfasst einen Prozessor und einen Speicher mit einem geschützten Speicherbereich. In dem geschützten Speicherbereich ist eine erste Gruppe von Attributen mit ersten Attributen eines Inhabers des ID-Tokens gespeichert. Ferner ist in dem geschützten Speicherbereich eine zweite Gruppe von Attributen mit zweiten Attributen des Inhabers gespeichert.

Die zweite Gruppe von Attributen umfasst zweite identische Attribute, die jeweils zu einem ersten identischen Attribut der ersten Gruppe von Attributen identisch sind. Die zweite Gruppe von Attributen umfasst ferner ein oder mehrere zweite verschiedene Attribute, die verschieden sind von den ersten Attributen der ersten Gruppe von Attributen. Die zweiten verschiedenen Attribute umfassen ein digitales Lichtbild des Inhabers des ID-Tokens.

Der elektronische ID-Token umfasst einen physischen Körper mit einem maschinenlesbaren Bereich, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem geschützten Speicherbereich gespeicherte erste Gruppe von Attributen ist ein erfolgreiches Authentifizieren des Inhabers durch den ID-Token und ein erfolgreiches Authentifizieren eines den entsprechenden Lesezugriff anfragenden Auslesecomputersystems durch den ID-Token. Voraussetzung für einen Lesezugriff auf die in dem geschützten Speicherbereich gespeicherte zweite Gruppe von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs berechenbar ist.

Das Verfahren umfasst ein Empfangen mehrerer im Zuge eines ersten Auslesevorgangs durch einen ersten Lesezugriff auf die erste Gruppe von Attributen aus dem ID-Token ausgelesener erster Attribute durch ein Ausstellercomputersystem. Mehrere im Zuge eines zweiten Auslesevorgangs durch einen zweiten Lesezugriff auf die zweite Gruppe von Attributen aus dem ID-Token ausgelesene zweite Attribute werden durch das Ausstellercomputersystem empfangen. Die empfangenen zweiten Attribute umfassen zumindest das digitale Lichtbild des Inhabers und zweite identische Attribute, die jeweils zu einem der empfangenen ersten identischen Attribute identisch sind. Die empfangenen ersten Attribute umfassen ferner zumindest ein von den empfangenen zweiten Attributen verschiedenes erstes Attribut. Das empfangene zumindest eine zweite identische Attribut wird durch das Ausstellercomputersystem auf eine Übereinstimmung mit dem empfangenen zumindest einen ersten identischen Attribut geprüft. Auf eine Übereinstimmung hin, wird der digitale ID-Nachweis durch das Ausstellercomputersystem ausgestellt, welcher die empfangenen ersten und zweiten Attribute umfasst sowie kryptographische Sicherungsdaten des Ausstellercomputersystems, welche eine Validierung des digitalen ID-Nachweises ermöglichen.

Beispiele können den Vorteil haben, dass diese ein Bereitstellen eines digitalen ID-Nachweises ermöglichen, welcher ein digitales Lichtbild des Inhabers des ID-Nachweises umfasst. Die digitale Identität in Form des ID-Nachweises umfasst das digitale Lichtbild als Attribut des Inhabers. Ein solcher digitaler ID-Nachweis ist somit auch für Anwendungen geeignet, welche ein digitales Lichtbild des Identitätsinhabers benötigen. Elektronische ID-Token, etwa in Form von amtlichen bzw. hoheitlichen Identitätsbescheinigungen, wie beispielsweise einem elektronischen Personalausweis, häufig ein Lichtbild des Inhabers umfassen.

Bei der Handhabung von Lichtbildern sind jedoch, wie bei allen Arten von biometrischen Merkmalen, hohe Standards im Bereich Datensicherheit von Nöten, um Missbrauch effektiv entgegenwirken zu können. So können Lichtbilder beispielsweise eine automatisierte Erkennung der entsprechenden Person mittels Gesichtserkennung ermöglichen. Um hier Missbrauch effektiv vorbeugen zu können, kann das Bereitstellen digitaler Lichtbilder an ein Erfüllen diverser Sicherheitsvoraussetzungen geknüpft werden.

Beispiele ermöglichen es ein hohes Maß an Datensicherheit beim Bereitstellen des digitalen Lichtbilds im Zuge des Ausstellens des entsprechenden ID-Nachweises sicherzustellen.

Das Auslesen der von dem ID-Nachweis umfassten Attribute erfordert im vorliegenden Fall zwei Zugriffe auf zwei verschiedene Gruppen von Attributen, welche zumindest teilweise unterschiedliche Attribute umfassen. Für diese beiden Zugriffe sind jeweils unterschiedliche Voraussetzungen zu erfüllen. Da zum Ausstellen des ID-Nachweises Attribute aus beiden Gruppen benötigt werden, müssen beide Kombinationen von Voraussetzungen erfüllt werden. Da die beiden Zugriffe über zwei unterschiedliche Auslesevorgänge erfolgen, welche auf unterschiedlichen kryptographischen Protokollen beruhen und potenziell über unterschiedliche Wege, d.h. unter Einbindung unterschiedlicher Hardwarekomponenten, ausgeführt werden, ist es deutlich schwieriger in unberechtigter Weise Zugriff auf sämtliche Attribute zu erhalten, als dies im Falle eines einzigen zeitgleichen Zugriffs auf alle Attribute wäre.

Da ein Teil der aus beiden Gruppen auszulesenden Attribute identisch sind, kann durch Prüfen dieser Attribute auf eine tatsächliche Übereinstimmung sichergestellt werden, dass die ausgelesenen Attribute tatsächlich aus ein und demselben ID-Token ausgelesen wurden. Zudem kann so sichergestellt werden, dass tatsächlich sämtliche Voraussetzungen für beide Zugriffe in Bezug auf ein und dasselbe ID-Token erfüllt wurden. Diese Prüfung auf Übereinstimmung stellt mithin eine Verbindung zwischen den beiden an sich unabhängigen Auslesevorgängen bzw. Zugriffen auf die beiden Gruppen von Attributen dar.

Die unterschiedlichen Voraussetzungen für die Zugriffe auf die verschiedenen Gruppen von Attributen umfassen dabei einerseits ein erfolgreiches Authentifizieren des Inhabers durch den ID-Token in Verbindung mit einem erfolgreichen Authentifizieren eines den entsprechenden Lesezugriff anfragenden Auslesecomputersystems durch den ID-Token und andererseits eine Verwendung eines Zugriffsschlüssel, dessen Berechnung einen optischen Zugriff auf den maschinenlesbaren Bereich des ID-Tokens voraussetzt.

Die Authentifizierung des Inhabers des ID-Tokens durch den ID-Token stellt dabei eine Multifaktorauthentifizierung dar. So ist für eine erfolgreiche Authentifizierung zum einen der Besitz des entsprechenden ID-Tokens und als weiterer Faktor, beispielsweise ein gegenüber dem ID-Token nachgewiesenes Wissen des Inhabers, etwa eine PIN, und/oder eine gegenüber dem ID-Token nachgewiesene Inhärenz des Inhabers, etwa ein biometrisches Merkmal, erforderlich. Beispielsweise wird der Nutzer im Zuge der Authentifizierung durch den ID-Token zudem identifiziert. Beispielsweise wird der Nutzer durch den ID-Token anhand des nachgewiesenen Wissens, etwa einer PIN, und/oder anhand der nachgewiesenen Inhärenz, etwa eines biometrischen Merkmals, identifiziert. Im Zuge der Identifikation weist der Inhaber beispielsweise Faktoren nach, welche ihn eindeutig identifizieren. Mit anderen Worten ist eine notwendige Voraussetzung für einen Zugriff auf die erste Gruppe von Attributen beispielsweise, dass sich ein aktueller Nutzer des ID-tokens im Zuge der Authentifizierung gegenüber dem ID-Token erfolgreich als der Inhaber des ID-Tokens identifiziert. Durch eine solche Identifikation kann effektiv verhindert werden, dass ein unberechtigter Dritter des ID-Tokens zum Erzeugen eines ID-Nachweises verwenden kann. Vielmehr ist ein Einverständnis des Inhabers des ID-Tokens zum Bereitstellen der entsprechenden Attribute aus der ersten Gruppe von Attributen notwendig, welches der Inhaber in Form der erfolgreichen Authentisierung gegenüber dem ID-Token erteilt.

Das Authentifizieren eines den entsprechenden Lesezugriff anfragenden Auslesecomputersystems durch den ID-Token kann beispielsweise sicherstellen, dass ein Lesezugriff auf die Attribute der ersten Gruppe von Attributen nur einem dazu berechtigten Auslesecomputersystem, etwa einem Computersystem eines ID-Providerdienstes gewährt wird. Das Auslesecomputersystem weist die entsprechende Berechtigung beispielsweise unter Verwendung eines entsprechenden Zertifikats nach. Beispielsweise erfolgt eine gegenseitige Authentifizierung, im Zuge derer das anfragenden Auslesecomputersystem durch den ID-Token und der ID-Token durch das anfragende Auslesecomputersystem authentifiziert werden. Somit kann durch das Auslesecomputersystem zudem sichergestellt werden, dass die ausgelesenen ersten Attribute aus einer sicheren Quelle, d.h. aus einem authentischen ID-Token, stammen.

Durch die Voraussetzung, dass eine Verwendung eines Zugriffschlüssels für einen Zugriff auf die Attribute der zweiten Gruppe von Attributen notwendig ist, kann sichergestellt werden, dass bei einem entsprechenden Auslesen des ID-Tokens eine optische Erfassung physischen Körper des ID-Tokens mit einem maschinenlesbaren Bereich erfolgt, d.h. der ID-Token bewusst zum Auslesen zur Verfügung gestellt wird. Um den Zugriffschlüssel erhalten zu können ist ein Zugriff auf den maschinenlesbaren Bereich notwendig. Dieser muss optisch erfassbar sein, damit die ID-Token-spezifischen und inhaberspezifischen Angaben zum Berechnen des Zugriffschlüssels erfasst werden können.

Da in die Berechnung des Zugriffschlüssels sowohl ID-Token-spezifischen Angaben als auch inhaberspezifischen Angaben einfließen, kann sichergestellt werden, dass der entsprechende Zugriffschlüssel eindeutig einem bestimmten ID-Token und Inhaber zugeordnet ist und ausschließlich einen Zugriff auf die Attribute der zweiten Gruppe von Attributen des zugeordneten ID-Tokens des entsprechenden Inhabers gewährt.

Der Zugriff auf die zweite Gruppe von Attributen erfordert somit beispielsweise eine optische Verbindung zwischen einem den maschinenlesbaren Bereich optisch erfassenden Gerät, etwa einem Inspektions-Computersystem, und dem physischen Körper des ID-Tokens. Eine solche optische Verbindung ist für ein Auslesen der Attribute der ersten Gruppe von Attributen beispielsweise nicht notwendig.

Beispielsweise kann der maschinenlesbare Bereich optisch erfasst, etwa abfotografiert, werden und die entsprechenden Angaben aus dem resultierenden Foto mittels optischer Texterkennung erfasst. Beispielsweise umfasst der maschinenlesbare Bereich die entsprechenden Angaben in Form eines optoelektronisch erfassbaren 2D-Codes, welcher mit optoelektronischen Verfahren erfasst werden kann.

Bei dem maschinenlesbaren Bereich handelt es sich beispielsweise um eine sogenannte MRZ (engl. Machine Readable Zone), welche einen sichtbaren Teil eines ID-Tokens, etwa eines Ausweis- oder Reisedokuments, umfasst, der dafür konfiguriert ist, durch optische Texterkennung erfasst bzw. gelesen zu werden. Für eine Beschriftung des maschinenlesbaren Bereich wird beispielsweise die Schriftart OCR-B verwendet. Diese Schriftart ist nichtproportional, d.h. jedes Zeichen besitzt die gleiche Laufweite. Anstelle von Leerzeichen wird beispielsweise das Symbol "<" verwendet, sodass jede Stelle des Lesebereichs mit einem Zeichen besetzt ist.

Beispiele können den Vorteil haben, dass ein einfaches und schnelles Verfahren zum Bereitstellen eines digitalen ID-Nachweises mit digitalem Lichtbild geschaffen wird. Insbesondere ist zum Bereitstellen des digitalen ID-Nachweises mit Lichtbild weder eine Registerabfrage eines zentralen Registers noch eine extra Lichtbildaufnahme notwendig. Insbesondere erfolgt beispielsweise keine zentrale Speicherung des Lichtbilds. Der Kontrolle über Zugriffe auf das im ID-Token gespeicherte digitale Lichtbild verbleibt somit beim Inhaber des ID-Tokens, welcher über das Bereitstellen des maschinenlesbaren Bereichs zur optischen Erfassung bewusst kontrollieren kann, wer Zugriff erhält.

Beispielsweise handelt es sich bei dem elektronischen ID-Token um ein hoheitliches Dokument. Beispiele können den Vorteil haben, dass durch eine Nutzung einer solchen hoheitlichen Quelle, etwa eines elektronischen ID-Tokens in Form eines elektronischen Personalausweises oder Reisepasses, für das Lichtbild ein hohes Maß an Sicherheit bezüglich der Authentizität des entsprechenden Lichtbildes gewährleistet werden kann.

Beispielsweise kann der erste Lesezugriff zeitlich vor, nach oder simultan mit dem zweiten Lesezugriff erfolgen.

Beispielsweise umfassen die Attribute der ersten Gruppe von Attributen einen Namen, ein Geburtsdatum, eine Anschrift, das Geschlecht und/oder eine Nationalität des Inhabers des ID-Tokens. Beispielsweise umfassen die Attribute der zweiten Gruppe von Attributen neben dem digitalen Lichtbild des Inhabers des ID-Tokens den Namen, das Geburtsdatum, das Geschlecht, und/oder die Nationalität des ID-Tokens. Die ersten verschiedenen Attribute umfassen beispielsweise Angaben zur Anschrift des Inhabers des ID-Tokens. Die zweiten verschiedenen Attribute umfassen beispielsweise das digitale Lichtbild des Inhabers des ID-Tokens. Die ersten und zweiten identischen Attribute, welche auf Übereinstimmung geprüft werden, umfassen beispielsweise Angaben zum Namen und Geburtsdatum des Inhabers des ID-Tokens.

Beispielsweise umfassen die ein oder mehreren optoelektronisch erfassbaren ID-Token-spezifischen Angaben eine ID des ID-Tokens und/oder ein Ablaufdatum des ID-Tokens. Beispielsweise umfassen die ein oder mehreren optoelektronisch erfassbaren inhaberspezifischen Angaben das Geburtsdatum und/oder den Namen des Inhabers des ID-Tokens. Beispielsweise umfasst ein Berechnen des Zugriffsschlüssels ein Bilden eines Hash-Werts aus den erfassten ID-Token-spezifischen und inhaberspezifischen Angaben. Beispielsweise wird der resultierende Hash-Wert als Zugriffsschlüssel verwendet. Beispielsweise wird der resultierende Hash-Wert zum Ableiten des Zugriffsschlüssels verwendet. Beispielsweise dient der Zugriffsschlüssel als initialer Schlüssel einer initialen Verschlüsselung einer Kommunikationsverbindung mit dem ID-Token, welche dazu verwendet werden kann einen dynamischen Sitzungsschlüssel auszuhandeln. Dieser dynamische Sitzungsschlüssel kann dann beispielsweise zur Verschlüsselung einer Kommunikationsverbindung mit dem ID-Token verwendet werden, über die zweiten Attribute aus der zweiten Gruppe von Attributen des ID-Tokens ausgelesen werden können.

Beispielsweise identifizieren die empfangenen zweiten identischen Attribute den Inhaber eindeutig. Damit identifizieren, bei einer Übereinstimmung, auch die empfangenen ersten identischen Attribute den Inhaber eindeutig. Insgesamt identifizieren somit einerseits die empfangenen ersten Attribute, insbesondere die empfangenen ersten identischen Attribute, und andererseits die empfangenen zweiten Attribute, insbesondere die empfangenen zweiten identischen Attribute, den Inhaber des ID-Tokens jeweils eindeutig. Liegt tatsächliche eine Übereinstimmung vor, so stammen sowohl die empfangenen ersten Attribute als auch die empfangenen zweiten Attribute aus dem ID-Token desselben Inhabers. Damit wurden aber auch sämtliche Zugriffsvoraussetzungen für Lesezugriffe auf die beiden Gruppen von Attributen, d.h. die erste Gruppe von Attributen und die zweite Gruppe von Attributen, erfüllt. Insbesondere wurde der durch die Attribute eindeutig identifizierte Inhaber des ID-Tokens im Zuge des Gewährens des Lesezugriffs auf die erste Gruppe von Attributen durch den ID-Token authentifiziert. Diese Authentifizierung stellt zugleich eine Zustimmung des Inhabers des ID-Tokens zum Auslesen der Attribute und damit indirekt zum Ausstellen des ID-Nachweises dar.

Beispielsweise umfassen die zweiten identischen Attribute das Geburtsdatum und/oder den Namen des Inhabers des ID-Tokens.

Beispielsweise kann dadurch sichergestellt werden, dass bei der Prüfung der empfangenen zweiten identischen Attribute auf Übereinstimmung mit den empfangenen ersten identischen Attributen jeweils erste und zweite Attribute geprüft werden, welche den Inhaber des ID-Tokens eindeutig identifizieren. Somit kann sichergestellt werden, dass die empfangenen ersten und die empfangenen zweiten Attribute jeweils aus dem ID-Token des eindeutig identifizierten Inhabers stammen und der im Zuge des Lesezugriffs auf die erste Gruppe von Attributen authentifizierte Inhaber des ID-Tokens derselbe Inhaber ist, dem auch die zweiten empfangenen Attribute zugeordnet sind. Somit kann sichergestellt werden, dass tatsächlich ein Einverständnis für Lesezugriffe auf den ID-Token seitens derjenigen Person vorliegt, welcher die empfangenen ersten und zweiten Attribute zugeordnet sind.

Beispielsweise ermöglichen die kryptographischen Sicherungsdaten eine Validierung einer Datenintegrität und/oder Datenauthentizität des digitalen ID-Nachweises.

Beispielsweise umfassen die kryptographischen Sicherungsdaten eine unter Verwendung eines ersten Signaturschlüssels des Ausstellercomputersystems erstellte Signatur des digitalen ID-Nachweises. Beispielsweise umfassen die kryptographischen Sicherungsdaten Daten einer authentifizierenden Verschlüsselung des digitalen ID-Nachweises.

Beispielsweise erfolgt der erste Lesezugriff auf die erste Gruppe von Attributen durch ein ID-Provider-Computersystem, welches die ausgelesenen ersten Attribute an das Ausstellercomputersystem weiterleitet.

Somit kann ein Auslesen von Attributen der ersten Gruppe von Attributen über ein ID-Provider-Computersystem erfolgen, welches ein Lesezugriffsrecht auf den ID-Token besitzt. Dieses Recht weist das ID-Provider-Computersystem beispielsweise im Zuge einer Authentifizierung, etwa unter Verwendung eines entsprechenden Zertifikats bzw. Lesezertifikats, nach. Das ID-Provider-Computersystem als unabhängige Instanz ermöglicht ein Auslesen von Attributen aus dem ID-Token, wobei Zugriffsrechte aber auf das dafür konfigurierte ID-Provider-Computersystem beschränkt sind. Mithin kann missbräuchlichen Zugriffen effektiv vorgebeugt werden.

Beispielsweise sendet das Ausstellercomputersystem eine erste Ausleseanfrage an das ID-Provider-Computersystem zum Auslesen der ersten Attribute aus dem ID-Token. Beispielsweise fragt das Ausstellercomputersystem bei dem ID-Provider-Computersystem die auszulesenden Attribute an. Alternativ kann das Ausstellercomputersystem die erste Ausleseanfrage auch an ein Endgerät des Inhabers des ID-Tokens senden, über welches der erste Lesezugriff auf das ID-Token erfolgt bzw. koordiniert wird. Das Endgerät des Inhabers des ID-Tokens kann die entsprechende erste Ausleseanfrage dann beispielsweise an das ID-Provider-Computersystem weiterleiten. Beispielsweise kann die erste Ausleseanfrage auch von dem Endgerät des Inhabers des ID-Tokens erzeugt und an das ID-Provider-Computersystem gesendet werden.

Beispielsweise erfolgt der erste Lesezugriff auf die erste Gruppe von Attributen durch das ID-Provider-Computersystem über ein Netzwerk. Beispielsweise erfolgt der erste Lesezugriff auf die erste Gruppe von Attributen durch das ID-Provider-Computersystem über eine verschlüsselte Kommunikationsverbindung. Beispielsweise erfolgt der erste Lesezugriff auf die erste Gruppe von Attributen durch das ID-Provider-Computersystem über eine ende-zu-ende-verschlüsselte Kommunikationsverbindung.

Beispielsweise erfolgt der erste Lesezugriff auf die erste Gruppe von Attributen durch das ID-Provider-Computersystem über ein Endgerät des Inhabers des ID-Tokens, welches mit dem ID-Provider-Computersystem über das Netzwerk kommuniziert und zugleich eine lokale Kommunikationsverbindung mit dem ID-Token aufbaut. Bei der lokalen Kommunikationsverbindung kann es sich beispielsweise um eine kontaktlose oder eine kontaktbasierte Kommunikationsverbindung handeln. Falls der erste Lesezugriff auf die erste Gruppe von Attributen durch das ID-Provider-Computersystem über eine ende-zu-ende-verschlüsselte Kommunikationsverbindung erfolgt, handelt es sich bei den beiden Enden der ende-zu-ende-verschlüsselten Kommunikationsverbindung beispielsweise um das ID-Provider-Computersystem und den ID-Token.

Beispielsweise erfolgt das Authentifizieren des Inhabers des ID-Tokens durch den ID-Token unter Verwendung des Endgeräts des Inhabers des ID-Tokens. Beispielsweise umfasst das Endgerät eine Nutzerschnittstelle, über welche der Nutzer ein oder mehrere Authentifizierungsfaktoren, etwa eine PIN oder ein biometrisches Merkmal, für die Authentifizierung bereitstellen kann. Die entsprechenden Authentifizierungsfaktoren oder daraus abgeleitete Werte werden von dem Endgerät des Inhabers des ID-Tokens beispielsweise über die lokale Kommunikationsverbindung an das ID-Token zur Authentifizierung des Nutzers weitergeleitet. Alternativerweise oder zusätzlich kann beispielsweise auch der ID-Token eine Nutzerschnittstelle zum Erfassen von Authentifizierungsfaktoren des Nutzers umfassen.

Beispielsweise werden die ausgelesenen ersten Attribute über ein Netzwerk von dem ID-Provider-Computersystem an das Ausstellercomputersystem weiterleitet. Beispielsweise werden die ausgelesenen ersten Attribute über eine verschlüsselte Kommunikationsverbindung von dem ID-Provider-Computersystem an das Ausstellercomputersystem weiterleitet. Beispielsweise werden die ausgelesenen ersten Attribute über eine ende-zu-ende-verschlüsselte Kommunikationsverbindung von dem ID-Provider-Computersystem an das Ausstellercomputersystem weiterleitet.

Beispielsweise werden die ausgelesenen ersten Attribute über das Netzwerk und das Endgerät des Inhabers des ID-Tokens von dem ID-Provider-Computersystem an das Ausstellercomputersystem weiterleitet. Das ID-Provider-Computersystem sendet die ausgelesenen ersten Attribute beispielsweise an das entsprechende Endgerät, welches die Attribute an das Ausstellercomputersystem weiterleitet. Beispielsweise werden die ausgelesenen ersten Attribute über eine verschlüsselte Kommunikationsverbindung weitergeleitet. Beispielsweise werden die ausgelesenen ersten Attribute mittels einer ende-zu-ende-verschlüsselten Kommunikationsverbindung von dem ID-Provider-Computersystem über das Netzwerk und das Endgerät des Inhabers an das Ausstellercomputersystem gesendet.

Beispielsweise sind die von dem ID-Provider-Computersystem empfangenen ersten Attribute unter Verwendung eines zweiten Signaturschlüssels des ID-Provider-Computersystems signiert. Das Ausstellercomputersystem validiert die Signatur der empfangenen ersten Attribute unter Verwendung eines dem zweiten Signaturschlüssel zugeordneten zweiten Signaturprüfschlüssel.

Somit kann das Ausstellercomputersystem sicherstellen, dass die empfangenen ersten Attribute tatsächlich aus einer sicheren Quelle stammen bzw. tatsächlich von dem ID-Provider-Computersystem ausgelesen wurden.

Beispielsweise umfasst das ID-Provider-Computersystem ein Zertifikat zum Nachweisen einer Leseberechtigung gegenüber dem ID-Token im Zuge des Authentifizierens des ID-Provider-Computersystems als das den ersten Lesezugriff anfragende Auslesecomputersystem durch den ID-Token.

Mit dem entsprechenden Zertifikat kann das ID-Provider-Computersystem seine Leseberechtigung gegenüber dem ID-Token in kryptographisch gesicherter Weise nachweisen. Beispielsweise umfasst das Zertifikat einen öffentlichen kryptographischen Schlüssel, welchen das Zertifikat dem ID-Provider-Computersystem zuordnet. Der öffentliche kryptographische Schlüssel gehört zu einem asymmetrischen Schlüsselpaar, dessen privater kryptographischer Schlüssel in der Verfügungshoheit des ID-Provider-Computersystems steht. Beispielsweise mittels eines Challenge-Response-Verfahrens kann das ID-Provider-Computersystem gegenüber dem ID-Token nachweisen, dass es im Besitz des entsprechenden privaten kryptographischen Schlüssels ist. Hierzu sendet beispielsweise das ID-Token eine Challenge an das ID-Provider-Computersystem, welches dieses mit einer Response beantwortet, die unter Verwendung des privaten kryptographischen Schlüssels erzeugt wurde. Die entsprechende Response kann der ID-Token dann beispielsweise unter Verwendung des öffentlichen kryptographischen Schlüssels auf ihre Validität hin überprüfen.

Beispielsweise erfolgt der erste Lesezugriff auf die erste Gruppe von Attributen durch das Ausstellercomputersystem.

Beispielsweise kann es sich bei dem Ausstellercomputersystem um ein ID-Provider-Computersystem handeln, welches dazu berechtigt und konfiguriert ist, auf den ID-Token zuzugreifen.

Beispielsweise erfolgt der erste Lesezugriff auf die erste Gruppe von Attributen durch das Ausstellercomputersystem über ein Netzwerk. Beispielsweise erfolgt der erste Lesezugriff auf die erste Gruppe von Attributen durch das Ausstellercomputersystem über eine verschlüsselte Kommunikationsverbindung. Beispielsweise erfolgt der erste Lesezugriff auf die erste Gruppe von Attributen durch das Ausstellercomputersystem über eine ende-zu-ende-verschlüsselte Kommunikationsverbindung.

Beispielsweise erfolgt der erste Lesezugriff auf die erste Gruppe von Attributen durch das Ausstellercomputersystem über ein Endgerät des Inhabers des ID-Tokens, welches mit dem ID-Provider-Computersystem über das Netzwerk kommuniziert und zugleich eine lokale Kommunikationsverbindung mit dem ID-Token aufbaut. Falls der erste Lesezugriff auf die erste Gruppe von Attributen durch das Ausstellercomputersystem über eine ende-zu-ende-verschlüsselte Kommunikationsverbindung erfolgt, handelt es sich bei den beiden Enden der ende-zu-ende-verschlüsselten Kommunikationsverbindung beispielsweise um das Ausstellercomputersystem und den ID-Token.

Beispielsweise umfasst das Ausstellercomputersystem ein Zertifikat zum Nachweisen einer Leseberechtigung gegenüber dem ID-Token im Zuge des Authentifizierens des Ausstellercomputersystems als das den ersten Lesezugriff anfragende Auslesecomputersystem durch den ID-Token.

Mit dem entsprechenden Zertifikat kann das Ausstellercomputersystem seine Leseberechtigung gegenüber dem ID-Token in kryptographisch gesicherter Weise nachweisen. Beispielsweise umfasst das Zertifikat einen öffentlichen kryptographischen Schlüssel, welchen das Zertifikat dem Ausstellercomputersystem zuordnet. Der öffentliche kryptographische Schlüssel gehört zu einem asymmetrischen Schlüsselpaar, dessen privater kryptographischer Schlüssel in der Verfügungshoheit des Ausstellercomputersystems steht. Beispielsweise mittels eines Challenge-Response-Verfahrens kann das Ausstellercomputersystem gegenüber dem ID-Token nachweisen, dass es im Besitz des entsprechenden privaten kryptographischen Schlüssels ist. Hierzu sendet beispielsweise das ID-Token eine Challenge an das Ausstellercomputersystem, welches dieses mit einer Response beantwortet, die unter Verwendung des privaten kryptographischen Schlüssels erzeugt wurde. Die entsprechende Response kann der ID-Token dann beispielsweise unter Verwendung des öffentlichen kryptographischen Schlüssels auf ihre Validität hin überprüfen.

Beispielsweise erfolgt der erste Lesezugriff auf die erste Gruppe von Attributen über ein Endgerät des Inhabers des ID-Tokens. Beispielsweise ist das Endgerät des Inhabers dazu konfiguriert, eine lokale Kommunikationsverbindung mit dem ID-Token aufzubauen. Bei der lokalen Kommunikationsverbindung kann es sich beispielsweise um eine kontaktlose oder eine kontaktbasierte Kommunikationsverbindung handeln. Beispielsweise ermöglicht das Endgerät des Inhabers eine Kommunikation des ID-Tokens über ein Netzwerk mit einem ID-Provider-Computersystem. Beispielsweise steuert das Endgerät des Inhabers das Bereitstellen der ersten und/oder zweiten Attribute zum Ausstellen des ID-Nachweises.

Beispielsweise handelt es sich bei dem Endgerät um ein mobiles tragbares Endgerät, etwa ein Smartphone, ein Tablet, ein Laptop oder ein Smart-Wearable.

Beispielsweise erfolgt der zweite Lesezugriff auf die zweite Gruppe von Attributen durch ein Inspektions-Computersystem, welches die ausgelesenen zweiten Attribute an das Ausstellercomputersystem weiterleitet.

Beispielsweise sendet das Ausstellercomputersystem eine zweite Ausleseanfrage an das Inspektions-Computersystem zum Auslesen der zweiten Attribute aus dem ID-Token.

Beispielsweise fragt das Ausstellercomputersystem bei dem Inspektions-Computersystem die auszulesenden Attribute an. Alternativ kann das Ausstellercomputersystem die zweite Ausleseanfrage auch an ein Endgerät des Inhabers des ID-Tokens senden, über welches der zweite Lesezugriff auf das ID-Token erfolgt bzw. koordiniert wird. Das Endgerät des Inhabers des ID-Tokens kann die entsprechende zweite Ausleseanfrage dann beispielsweise an das Inspektions-Computersystem weiterleiten. Beispielsweise kann die zweite Ausleseanfrage auch von dem Endgerät des Inhabers des ID-Tokens erzeugt und an das Inspektions-Computersystem gesendet werden.

Beispielsweise wird der zweite Lesezugriff auf die zweite Gruppe von Attributen von dem Inspektions-Computersystem selbst initiiert.

Beispielsweise erfolgt der zweite Lesezugriff auf die zweite Gruppe von Attributen durch das Inspektions-Computersystem über eine verschlüsselte Kommunikationsverbindung. Beispielsweise erfolgt der zweite Lesezugriff auf die zweite Gruppe von Attributen durch das Inspektions-Computersystem über eine ende-zu-ende-verschlüsselte Kommunikationsverbindung.

Beispielsweise handelt es sich bei der Kommunikationsverbindung zwischen dem Inspektions-Computersystem und dem ID-Token zum Auslesen der zweiten Attribute um eine lokale Kommunikationsverbindung. Beispielsweise ist das Inspektions-Computersystem dazu konfiguriert, die lokale Kommunikationsverbindung mit dem ID-Token aufzubauen. Bei der lokalen Kommunikationsverbindung kann es sich beispielsweise um eine kontaktlose oder eine kontaktbasierte Kommunikationsverbindung handeln.

Beispielsweise werden die ausgelesenen zweiten Attribute über ein Netzwerk von dem Inspektions-Computersystem an das Ausstellercomputersystem weiterleitet. Beispielsweise werden die ausgelesenen zweiten Attribute über eine verschlüsselte Kommunikationsverbindung von dem Inspektions-Computersystem an das Ausstellercomputersystem weiterleitet. Beispielsweise werden die ausgelesenen zweiten Attribute über eine ende-zu-ende-verschlüsselte Kommunikationsverbindung von dem Inspektions-Computersystem an das Ausstellercomputersystem weiterleitet.

Beispielsweise werden die ausgelesenen zweiten Attribute über das Netzwerk ohne Einbindung eines Endgeräts des Inhabers des ID-Tokens von dem Inspektions-Computersystem an das Ausstellercomputersystem weiterleitet.

Beispielsweise werden die ausgelesenen zweiten Attribute über das Netzwerk und das Endgerät des Inhabers des ID-Tokens von dem Inspektions-Computersystem an das Ausstellercomputersystem weiterleitet. Das Inspektions-Computersystem sendet die ausgelesenen ersten Attribute beispielsweise an das entsprechende Endgerät, welches die Attribute an das Ausstellercomputersystem weiterleitet. Beispielsweise werden die ausgelesenen zweiten Attribute über eine verschlüsselte Kommunikationsverbindung weitergeleitet. Beispielsweise werden die ausgelesenen zweiten Attribute mittels einer ende-zu-ende-verschlüsselten Kommunikationsverbindung von dem Inspektions-Computersystem über das Netzwerk und das Endgerät des Inhabers an das Ausstellercomputersystem gesendet.

Beispielsweise sind die von dem Inspektions-Computersystem empfangenen zweiten Attribute unter Verwendung eines dritten Signaturschlüssels des Inspektions-Computersystems signiert. Das Ausstellercomputersystem validiert die Signatur der empfangenen zweiten Attribute unter Verwendung eines dem dritten Signaturschlüssel zugeordneten dritten Signaturprüfschlüssels.

Somit kann das Ausstellercomputersystem sicherstellen, dass die empfangenen zweiten Attribute tatsächlich aus einer sicheren Quelle stammen bzw. tatsächlich von dem Inspektions-Computersystem ausgelesen wurden.

Beispielsweise umfasst das Inspektions-Computersystem einen optoelektronischen Sensor zum optoelektronischen Erfassen der Angaben des maschinenlesbaren Bereichs des ID-Tokens. Dadurch, dass der maschinenlesbare Bereich des ID-Tokens von dem Inspektions-Computersystem unter Verwendung des optoelektronischen Sensors erfasst wird, kann sichergestellt werden, dass der ID-Token dem Inspektions-Computersystem im Zuge des Lesezugriffs auf die zweite Gruppe von Attributen derart in physischer Form vorgelegen hat, dass eine optische Erfassung des maschinenlesbaren Bereichs des ID-Tokens möglich war.

Beispielsweise erfolgt der zweite Lesezugriff auf die zweite Gruppe von Attributen durch das Ausstellercomputersystem.

Beispielsweise kann das Ausstellercomputersystem als Inspektions-Computersystem konfiguriert sein.

Beispielsweise erfolgt der zweite Lesezugriff auf die zweite Gruppe von Attributen durch das Ausstellercomputersystem über eine verschlüsselte Kommunikationsverbindung. Beispielsweise erfolgt der zweite Lesezugriff auf die zweite Gruppe von Attributen durch das Ausstellercomputersystem über eine ende-zu-ende-verschlüsselte Kommunikationsverbindung.

Beispielsweise handelt es sich bei der Kommunikationsverbindung zwischen dem Ausstellercomputersystem und dem ID-Token zum Auslesen der zweiten Attribute um eine lokale Kommunikationsverbindung. Beispielsweise ist das Ausstellercomputersystem dazu konfiguriert, die lokale Kommunikationsverbindung mit dem ID-Token aufzubauen. Bei der lokalen Kommunikationsverbindung kann es sich beispielsweise um eine kontaktlose oder eine kontaktbasierte Kommunikationsverbindung handeln.

Beispielsweise umfasst das Ausstellercomputersystem einen optoelektronischen Sensor zum optoelektronischen Erfassen der Angaben des maschinenlesbaren Bereichs des ID-Tokens. Dadurch, dass der maschinenlesbare Bereich des ID-Tokens von dem Ausstellercomputersystem unter Verwendung des optoelektronischen Sensors erfasst wird, kann sichergestellt werden, dass der ID-Token dem Ausstellercomputersystem im Zuge des Lesezugriffs auf die zweite Gruppe von Attributen derart in physischer Form vorgelegen hat, dass eine optische Erfassung des maschinenlesbaren Bereichs des ID-Tokens möglich war.

Beispielsweise empfängt das Ausstellercomputersystem eine Ausstellanfrage zum Ausstellen des ID-Nachweis von einem Endgerät des Inhabers des ID-Tokens. Das Ausstellercomputersystem sendet den ausgestellten ID-Nachweis in Antwort auf die Ausstellanfrage an das Endgerät.

Beispielsweise wird das Ausstellen des ID-Nachweises von dem Inhaber des ID-Tokens unter Verwendung des Endgeräts mit der Ausstellanfrage initiiert. Beispielsweise spezifiziert die Ausstellanfrage, dass der auszustellende ID-Nachweis ein digitales Lichtbild des Inhabers des ID-Tokens umfassen soll. Sobald der angefragte ID-Nachweis von dem Ausstellercomputersystem ausgestellt wurde, wird dieser zur weiteren Verwendung an das anfragende Endgerät gesendet.

Beispielsweise handelt es sich bei dem Endgerät um ein mobiles tragbares Endgerät, wie etwa ein Smartphone, ein Tablet, ein Laptop oder ein Smart-Wearable.

Beispielsweise sendet das Ausstellercomputersystem den ausgestellten ID-Nachweis zum Speichern an eine digitale Ausweiswallet des Endgeräts. Der ID-Nachweis kann in der digitalen Ausweiswallet des Endgeräts gespeichert und von dieser beispielsweise zu Identifikationszwecken verwendet werden.

In einem weiteren Aspekt ist ein Verfahren zum Bereitstellen eines digitalen ID-Nachweises unter Verwendung eines ersten elektronischen ID-Tokens und eines zweiten elektronischen ID-Tokens offenbart. Der erste ID-Token umfasst einen ersten physischen Körper mit einem ersten Prozessor und einem ersten Speicher mit einem ersten geschützten Speicherbereich. Der zweite ID-Token umfasst einen zweiten physischen Körper mit einem zweiten Prozessor und einem zweiten Speicher mit einem zweiten geschützten Speicherbereich.

In dem ersten geschützten Speicherbereich ist eine erste Gruppe von Attributen mit ersten Attributen eines Inhabers des ersten ID-Tokens gespeichert. In dem zweiten geschützten Speicherbereich ist ferner eine zweite Gruppe von Attributen mit zweiten Attributen des Inhabers des zweiten ID-Tokens gespeichert. Der erste und zweite ID-Token sind demselben Inhaber zugeordnet.

Die zweite Gruppe von Attributen umfasst zweite identische Attribute, die jeweils zu einem ersten identischen Attribut der ersten Gruppe von Attributen identisch sind. Die zweite Gruppe von Attributen umfasst ferner ein oder mehrere zweite verschiedene Attribute, die verschieden sind von den ersten Attributen der ersten Gruppe von Attributen. Die zweiten verschiedenen Attribute umfassen ein digitales Lichtbild des Inhabers.

Voraussetzung für einen Lesezugriff auf die in dem ersten geschützten Speicherbereich gespeicherte erste Gruppe von Attributen ist ein erfolgreiches Authentifizieren des Inhabers durch den ersten ID-Token und ein erfolgreiches Authentifizieren eines den entsprechenden Lesezugriff anfragenden Auslesecomputersystems durch den ersten ID-Token.

Der zweite physischen Körper des zweiten elektronischen ID-Tokens umfasst einen maschinenlesbaren Bereich, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem zweiten geschützten Speicherbereich des zweiten elektronischen ID-Tokens gespeicherte zweite Gruppe von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs berechenbar.

Das Verfahren umfasst ein Empfangen mehrerer im Zuge eines ersten Auslesevorgangs durch einen ersten Lesezugriff auf die erste Gruppe von Attributen aus dem ersten ID-Token ausgelesener erster Attribute durch ein Ausstellercomputersystem, ein Empfangen mehrerer im Zuge eines zweiten Auslesevorgangs durch einen zweiten Lesezugriff auf die zweite Gruppe von Attributen aus dem zweiten ID-Token ausgelesener zweiter Attribute durch das Ausstellercomputersystem, wobei die empfangenen zweiten Attribute zumindest das digitale Lichtbild des Inhabers und zweite identische Attribute umfassen, die jeweils zu einem der empfangenen ersten identischen Attribute identisch sind, wobei die empfangenen ersten Attribute ferner zumindest ein von den empfangenen zweiten Attributen verschiedenes erstes Attribut umfassen, ein Prüfen des empfangenen zumindest einen zweiten identischen Attributs auf eine Übereinstimmung mit dem empfangenen zumindest einen ersten identischen Attribut durch das Ausstellercomputersystem, und auf eine Übereinstimmung hin, ein Ausstellen des digitalen ID-Nachweises durch das Ausstellercomputersystem, welcher die empfangenen ersten und zweiten Attribute umfasst sowie kryptographische Sicherungsdaten des Ausstellercomputersystems, welche eine Validierung des digitalen ID-Nachweises ermöglichen.

In einem weiteren Aspekt ist ein System zum Bereitstellen eines digitalen ID-Nachweises unter Verwendung eines elektronischen ID-Tokens offenbart. Das System umfasst den ID-Token und ein Ausstellercomputersystem. Der ID-Token umfasst einen Prozessor und einen Speicher mit einem geschützten Speicherbereich. In dem geschützten Speicherbereich ist eine erste Gruppe von Attributen mit ersten Attributen eines Inhabers des ID-Tokens gespeichert. Ferner ist in dem geschützten Speicherbereich eine zweite Gruppe von Attributen mit zweiten Attributen des Inhabers gespeichert.

Die zweite Gruppe von Attributen umfasst zweite identische Attribute, die jeweils zu einem ersten identischen Attribut der ersten Gruppe von Attributen identisch sind. Die zweite Gruppe von Attributen umfasst ferner ein oder mehrere zweite verschiedene Attribute, die verschieden sind von den ersten Attributen der ersten Gruppe von Attributen. Die zweiten verschiedenen Attribute umfassen ein digitales Lichtbild des Inhabers des ID-Tokens.

Der elektronische ID-Token umfasst einen physischen Körper mit einem maschinenlesbaren Bereich, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem geschützten Speicherbereich gespeicherte erste Gruppe von Attributen ist ein erfolgreiches Authentifizieren des Inhabers durch den ID-Token und ein erfolgreiches Authentifizieren eines den entsprechenden Lesezugriff anfragenden Auslesecomputersystems durch den ID-Token. Voraussetzung für einen Lesezugriff auf die in dem geschützten Speicherbereich gespeicherte zweite Gruppe von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs berechenbar ist.

Das Ausstellercomputersystem umfasst einen Prozessor und einen Speicher mit maschinenlesbaren Programminstruktionen.

Ein Ausführen der Programminstruktionen durch den Prozessor veranlasst das Ausstellercomputersystem zum Empfangen mehrerer im Zuge eines ersten Auslesevorgangs durch einen ersten Lesezugriff auf die erste Gruppe von Attributen aus dem ID-Token ausgelesener erster Attribute durch ein Ausstellercomputersystem. Mehrere im Zuge eines zweiten Auslesevorgangs durch einen zweiten Lesezugriff auf die zweite Gruppe von Attributen aus dem ID-Token ausgelesene zweite Attribute werden durch das Ausstellercomputersystem empfangen. Die empfangenen zweiten Attribute umfassen zumindest das digitale Lichtbild des Inhabers und zweite identische Attribute, die jeweils zu einem der empfangenen ersten identischen Attribute identisch sind. Die empfangenen ersten Attribute umfassen ferner zumindest ein von den empfangenen zweiten Attributen verschiedenes erstes Attribut. Das empfangene zumindest eine zweite identische Attribut wird durch das Ausstellercomputersystem auf eine Übereinstimmung mit dem empfangenen zumindest einen ersten identischen Attribut geprüft. Auf eine Übereinstimmung hin, wird der digitale ID-Nachweis durch das Ausstellercomputersystem ausgestellt, welcher die empfangenen ersten und zweiten Attribute umfasst sowie kryptographische Sicherungsdaten des Ausstellercomputersystems, welche eine Validierung des digitalen ID-Nachweises ermöglichen.

Das System zum Bereitstellen eines digitalen ID-Nachweises kann beispielsweise dazu konfiguriert, jeden der vorangehenden beschriebenen beispielhaften Verfahrensschritte des Verfahrens zum Bereitstellen des digitalen ID-Nachweises auszuführen.

In einem weiteren Aspekt ist ein System zum Bereitstellen eines digitalen ID-Nachweises unter Verwendung eines ersten elektronischen ID-Tokens und eines zweiten elektronischen ID-Tokens offenbart. Das System umfasst die beiden ID-Token und ein Ausstellercomputersystem. Der erste ID-Token umfasst einen ersten physischen Körper mit einem ersten Prozessor und einem ersten Speicher mit einem ersten geschützten Speicherbereich. Der zweite ID-Token umfasst einen zweiten physischen Körper mit einem zweiten Prozessor und einem zweiten Speicher mit einem zweiten geschützten Speicherbereich.

In dem ersten geschützten Speicherbereich ist eine erste Gruppe von Attributen mit ersten Attributen eines Inhabers des ersten ID-Tokens gespeichert. In dem zweiten geschützten Speicherbereich ist ferner eine zweite Gruppe von Attributen mit zweiten Attributen des Inhabers des zweiten ID-Tokens gespeichert. Der erste und zweite ID-Token sind demselben Inhaber zugeordnet.

Die zweite Gruppe von Attributen umfasst zweite identische Attribute, die jeweils zu einem ersten identischen Attribut der ersten Gruppe von Attributen identisch sind. Die zweite Gruppe von Attributen umfasst ferner ein oder mehrere zweite verschiedene Attribute, die verschieden sind von den ersten Attributen der ersten Gruppe von Attributen. Die zweiten verschiedenen Attribute umfassen ein digitales Lichtbild des Inhabers.

Voraussetzung für einen Lesezugriff auf die in dem ersten geschützten Speicherbereich gespeicherte erste Gruppe von Attributen ist ein erfolgreiches Authentifizieren des Inhabers durch den ersten ID-Token und ein erfolgreiches Authentifizieren eines den entsprechenden Lesezugriff anfragenden Auslesecomputersystems durch den ersten ID-Token.

Der zweite physischen Körper des zweiten elektronischen ID-Tokens umfasst einen maschinenlesbaren Bereich, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem zweiten geschützten Speicherbereich des zweiten elektronischen ID-Tokens gespeicherte zweite Gruppe von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs berechenbar ist.

Das Ausstellercomputersystem umfasst einen Prozessor und einen Speicher mit maschinenlesbaren Programminstruktionen.

Ein Ausführen der Programminstruktionen durch den Prozessor veranlasst das Ausstellercomputersystem zum Empfangen mehrerer im Zuge eines ersten Auslesevorgangs durch einen ersten Lesezugriff auf die erste Gruppe von Attributen aus dem ersten ID-Token ausgelesener erster Attribute durch ein Ausstellercomputersystem, Empfangen mehrerer im Zuge eines zweiten Auslesevorgangs durch einen zweiten Lesezugriff auf die zweite Gruppe von Attributen aus dem zweiten ID-Token ausgelesener zweiter Attribute durch das Ausstellercomputersystem, wobei die empfangenen zweiten Attribute zumindest das digitale Lichtbild des Inhabers und zweite identische Attribute umfassen, die jeweils zu einem der empfangenen ersten identischen Attribute identisch sind, wobei die empfangenen ersten Attribute ferner zumindest ein von den empfangenen zweiten Attributen verschiedenes erstes Attribut umfassen, Prüfen des empfangenen zumindest einen zweiten identischen Attributs auf eine Übereinstimmung mit dem empfangenen zumindest einen ersten identischen Attribut durch das Ausstellercomputersystem, und auf eine Übereinstimmung hin, Ausstellen des digitalen ID-Nachweises durch das Ausstellercomputersystem, welcher die empfangenen ersten und zweiten Attribute umfasst sowie kryptographische Sicherungsdaten des Ausstellercomputersystems, welche eine Validierung des digitalen ID-Nachweises ermöglichen.

Das System zum Bereitstellen eines digitalen ID-Nachweises kann beispielsweise dazu konfiguriert, jeden der vorangehenden beschriebenen beispielhaften Verfahrensschritte des Verfahrens zum Bereitstellen des digitalen ID-Nachweises auszuführen.

Beispielsweise umfasst das System ferner ein ID-Provider-Computersystem. Das ID-Provider-Computersystem ist dazu konfiguriert, den ersten Lesezugriff auf die erste Gruppe von Attributen auszuführen und die ausgelesenen ersten Attribute an das Ausstellercomputersystem weiterzuleiten.

Das ID-Provider-Computersystem des Systems zum Bereitstellen eines digitalen ID-Nachweises kann beispielsweise dazu konfiguriert jeden der vorangehenden beschriebenen beispielhaften, durch ein ID-Provider-Computersystem ausgeführten Verfahrensschritte des Verfahrens zum Bereitstellen des digitalen ID-Nachweises auszuführen.

Beispielsweise erfolgt der erste Lesezugriff auf die erste Gruppe von Attributen durch das Ausstellercomputersystem. Beispielsweise ist das Ausstellercomputersystem als ein ID-Provider-Computersystem konfiguriert.

Beispielsweise umfasst das System ferner ein Inspektions-Computersystem. Das Inspektions-Computersystem ist dazu konfiguriert, den zweiten Lesezugriff auf die zweite Gruppe von Attributen auszuführen und die ausgelesenen zweiten Attribute an das Ausstellercomputersystem weiterzuleiten.

Das Inspektions-Computersystem des Systems zum Bereitstellen eines digitalen ID-Nachweises kann beispielsweise dazu konfiguriert jeden der vorangehenden beschriebenen beispielhaften, durch ein Inspektions-Computersystem ausgeführten Verfahrensschritte des Verfahrens zum Bereitstellen des digitalen ID-Nachweises auszuführen.

Beispielsweise erfolgt der zweite Lesezugriff auf die zweite Gruppe von Attributen durch das Ausstellercomputersystem. Beispielsweise ist das Ausstellercomputersystem als ein Inspektions-Computersystem konfiguriert.

Beispielsweise umfasst das System ferner ein Endgerät des Inhabers des ID-Tokens. Das Endgerät ist dazu konfiguriert, eine Ausstellanfrage zum Ausstellen des ID-Nachweis an das Ausstellercomputersystem zu senden. Das Ausführen der Programminstruktionen durch den Prozessor veranlasst das Ausstellercomputersystem ferner den ausgestellten ID-Nachweis in Antwort auf die Ausstellanfrage an das Endgerät zu senden.

Das Endgerät des Systems zum Bereitstellen eines digitalen ID-Nachweises kann beispielsweise dazu konfiguriert, jeden der vorangehenden beschriebenen beispielhaften, durch ein Endgerät des Inhabers des ID-Tokens ausgeführten Verfahrensschritte des Verfahrens zum Bereitstellen des digitalen ID-Nachweises auszuführen.

Beispielsweise erfolgt der erste Lesezugriff auf die erste Gruppe von Attributen über das Endgerät des Inhabers des ID-Tokens.

Beispielsweise handelt es sich bei dem Endgerät um ein mobiles tragbares Endgerät, etwa ein Smartphone, ein Tablet, ein Laptop oder ein Smart-Wearable.

Es versteht sich, dass eine oder mehrere der vorgenannten Ausführungsformen miteinander kombiniert werden können, solange sich die Ausführungsformen nicht gegenseitig ausschließen.

### KURZE BESCHREIBUNG DER ZEICHNUNGEN

Im Folgenden werden Beispiele anhand der Zeichnungen näher erläutert. Es zeigen:
Fig. 1 ein erstes Flussdiagramm eines exemplarischen Verfahrens zum Bereitstellen eines digitalen ID-Nachweises unter Verwendung eines elektronischen ID-Tokens,
Fig. 2 ein zweites Flussdiagramm eines exemplarischen Verfahrens zum Bereitstellen eines digitalen ID-Nachweises unter Verwendung eines elektronischen ID-Tokens,
Fig. 3A ein erster Teil eines ersten Blockdiagramms eines exemplarischen Systems zum Bereitstellen eines digitalen ID-Nachweises unter Verwendung eines elektronischen ID-Tokens,
Fig. 3B ein zweiter Teil eines ersten Blockdiagramms des exemplarischen Systems zum Bereitstellen eines digitalen ID-Nachweises unter Verwendung eines elektronischen ID-Tokens,
Fig. 4 ein zweites Blockdiagramm eines exemplarischen Systems zum Bereitstellen eines digitalen ID-Nachweises unter Verwendung eines elektronischen ID-Tokens,
Fig. 5 ein drittes Blockdiagramm eines exemplarischen Systems zum Bereitstellen eines digitalen ID-Nachweises unter Verwendung eines elektronischen ID-Tokens,
Fig. 6 ein viertes Blockdiagramm eines exemplarischen Systems zum Bereitstellen eines digitalen ID-Nachweises unter Verwendung eines elektronischen ID-Tokens, und
Fig. 7 ein Blockdiagramm eines ersten und eines zweiten elektronischen ID-Tokens zum Bereitstellen eines digitalen ID-Nachweises.

### DETAILLIERTE BESCHREIBUNG

Im Folgenden werden einander ähnliche Elemente mit den gleichen Bezugszeichen gekennzeichnet.

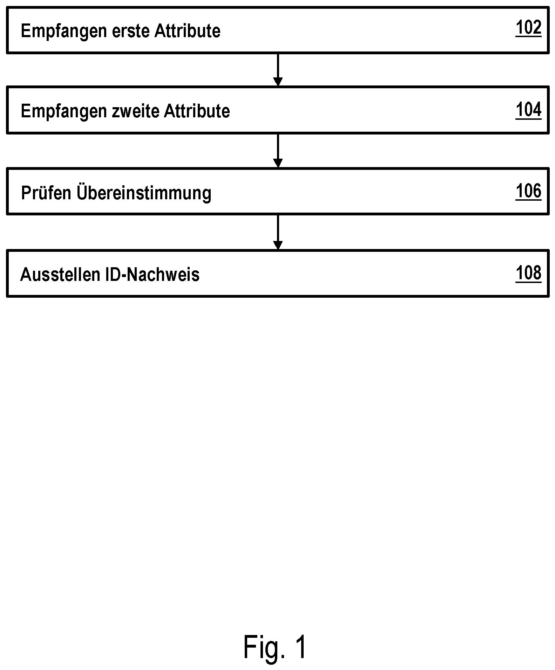

Figur 1 zeigt ein exemplarisches Verfahren zum Bereitstellen eines digitalen ID-Nachweises unter Verwendung eines elektronischen ID-Tokens. Der ID-Token umfasst einen Prozessor und einen Speicher mit einem geschützten Speicherbereich. In dem geschützten Speicherbereich ist eine erste Gruppe von Attributen mit ersten Attributen eines Inhabers des ID-Tokens gespeichert. Ferner ist in dem geschützten Speicherbereich eine zweite Gruppe von Attributen mit zweiten Attributen des Inhabers gespeichert.

Die zweite Gruppe von Attributen umfasst zweite identische Attribute, die jeweils zu einem ersten identischen Attribut der ersten Gruppe von Attributen identisch sind. Die zweite Gruppe von Attributen umfasst ferner ein oder mehrere zweite verschiedene Attribute, die verschieden sind von den ersten Attributen der ersten Gruppe von Attributen. Die zweiten verschiedenen Attribute umfassen ein digitales Lichtbild des Inhabers des ID-Tokens.

Der elektronische ID-Token umfasst einen physischen Körper mit einem maschinenlesbaren Bereich, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem geschützten Speicherbereich gespeicherte erste Gruppe von Attributen ist ein erfolgreiches Authentifizieren des Inhabers durch den ID-Token und ein erfolgreiches Authentifizieren eines den entsprechenden Lesezugriff anfragenden Auslesecomputersystems durch den ID-Token. Voraussetzung für einen Lesezugriff auf die in dem geschützten Speicherbereich gespeicherte zweite Gruppe von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs berechenbar ist.

In Block 102 empfängt ein Ausstellercomputersystem mehrere im Zuge eines ersten Auslesevorgangs durch einen ersten Lesezugriff auf die erste Gruppe von Attributen aus dem ID-Token ausgelesene erste Attribute. In Block 104 empfängt das Ausstellercomputersystem mehrere im Zuge eines zweiten Auslesevorgangs durch einen zweiten Lesezugriff auf die zweite Gruppe von Attributen aus dem ID-Token ausgelesene zweite Attribute. Die empfangenen zweiten Attribute umfassen zumindest das digitale Lichtbild des Inhabers und zweite identische Attribute, die jeweils zu einem der empfangenen ersten identischen Attribute identisch sind. Die empfangenen ersten Attribute umfassen ferner zumindest ein von den empfangenen zweiten Attributen verschiedenes erstes Attribut. Die Blöcke 102 und 104 können gleichzeitig oder nacheinander ausgeführt werden. Beispielsweise können die ersten Attribute vor den zweiten Attributen oder nach den zweiten Attributen ausgeführt werden.

Beispielsweise empfängt das Ausstellercomputersystem die ersten Attribute von einem ID-Provider-Computersystem, welches die ersten Attribute aus dem ID-Token ausliest. Beispielsweise liest das ID-Provider-Computersystem die ersten Attribute aus dem ID-Token über ein Endgerät aus, welches eine Verbindung zwischen dem Endgerät und einem Netzwerk herstellt. Beispielsweise ist das Ausstellercomputersystem selbst als ID-Provider-Computersystem konfiguriert und liest die ersten Attribute selbst aus dem ID-Token aus. Dabei kann das Ausstellercomputersystem beispielsweise über ein Endgerät oder direkt über eine kontaktlose oder kontaktbehaftete Kommunikationsverbindung auf das ID-Token zugreifen.

Beispielsweise empfängt das Ausstellercomputersystem die zweiten Attribute von einem Inspektions-Computersystem, welches die zweiten Attribute aus dem ID-Token ausliest. Beispielsweise ist das Ausstellercomputersystem selbst als Inspektions-Computersystem konfiguriert und liest die zweiten Attribute selbst aus dem ID-Token aus.

In Block 106 prüft das Ausstellercomputersystem das empfangene zumindest eine zweite identische Attribut auf eine Übereinstimmung mit dem empfangenen zumindest einen ersten identischen Attribut. Auf eine Übereinstimmung hin, stellt das Ausstellercomputersystem in Block 108 den digitale ID-Nachweise aus, welcher die empfangenen ersten und zweiten Attribute umfasst und unter Verwendung eines ersten Signaturschlüssels des Ausstellercomputersystems signiert ist.

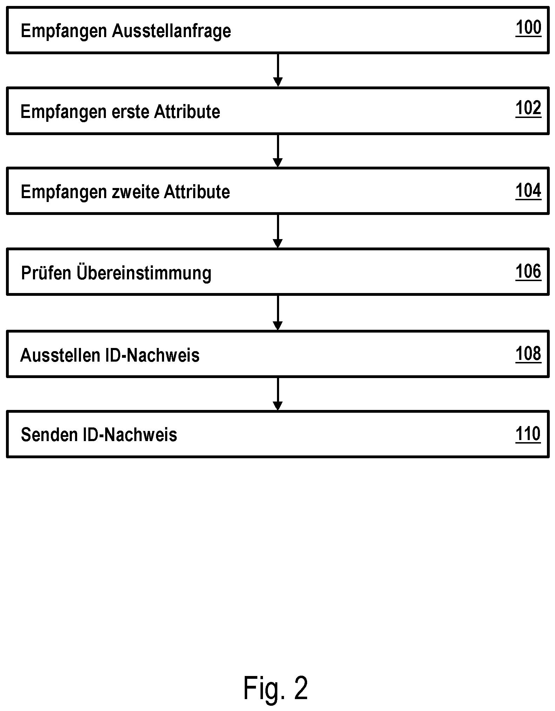

Figur 2 zeigt ein exemplarisches Verfahren zum Bereitstellen eines digitalen ID-Nachweises unter Verwendung eines elektronischen ID-Tokens. Der ID-Token umfasst einen Prozessor und einen Speicher mit einem geschützten Speicherbereich. In dem geschützten Speicherbereich ist eine erste Gruppe von Attributen mit ersten Attributen eines Inhabers des ID-Tokens gespeichert. Ferner ist in dem geschützten Speicherbereich eine zweite Gruppe von Attributen mit zweiten Attributen des Inhabers gespeichert.

Die zweite Gruppe von Attributen umfasst zweite identische Attribute, die jeweils zu einem ersten identischen Attribut der ersten Gruppe von Attributen identisch sind. Die zweite Gruppe von Attributen umfasst ferner ein oder mehrere zweite verschiedene Attribute, die verschieden sind von den ersten Attributen der ersten Gruppe von Attributen. Die zweiten verschiedenen Attribute umfassen ein digitales Lichtbild des Inhabers des ID-Tokens.

Der elektronische ID-Token umfasst einen physischen Körper mit einem maschinenlesbaren Bereich, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem geschützten Speicherbereich gespeicherte erste Gruppe von Attributen ist ein erfolgreiches Authentifizieren des Inhabers durch den ID-Token und ein erfolgreiches Authentifizieren eines den entsprechenden Lesezugriff anfragenden Auslesecomputersystems durch den ID-Token. Voraussetzung für einen Lesezugriff auf die in dem geschützten Speicherbereich gespeicherte zweite Gruppe von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs berechenbar ist.

In Block 100 empfängt ein Ausstellercomputersystem eine Ausstellanfrage zum Ausstellen des ID-Nachweis von einem Endgerät des Inhabers des ID-Tokens. Auf den Empfang der Ausstellanfrage hin, initiiert das Ausstellercomputersystem ein Auslesen erster Attribute aus der ersten Gruppe von Attributen aus dem ID-Token sowie ein Auslesen zweiter Attribute aus der zweiten Gruppe von Attributen aus dem ID-Token.

In Block 102 empfängt das Ausstellercomputersystem mehrere im Zuge eines ersten Auslesevorgangs durch einen ersten Lesezugriff auf die erste Gruppe von Attributen aus dem ID-Token ausgelesene erste Attribute. In Block 104 empfängt das Ausstellercomputersystem mehrere im Zuge eines zweiten Auslesevorgangs durch einen zweiten Lesezugriff auf die zweite Gruppe von Attributen aus dem ID-Token ausgelesene zweite Attribute. Die empfangenen zweiten Attribute umfassen zumindest das digitale Lichtbild des Inhabers und zweite identische Attribute, die jeweils zu einem der empfangenen ersten identischen Attribute identisch sind. Die empfangenen ersten Attribute umfassen ferner zumindest ein von den empfangenen zweiten Attributen verschiedenes erstes Attribut. Die Blöcke 102 und 104 können gleichzeitig oder nacheinander ausgeführt werden. Beispielsweise können die ersten Attribute vor den zweiten Attributen oder nach den zweiten Attributen ausgeführt werden.

Beispielsweise empfängt das Ausstellercomputersystem die ersten Attribute von einem ID-Provider-Computersystem, welches die ersten Attribute aus dem ID-Token ausliest. Beispielsweise liest das ID-Provider-Computersystem die ersten Attribute aus dem ID-Token über ein Endgerät aus, welches eine Verbindung zwischen dem Endgerät und einem Netzwerk herstellt. Beispielsweise ist das Ausstellercomputersystem selbst als ID-Provider-Computersystem konfiguriert und liest die ersten Attribute selbst aus dem ID-Token aus. Dabei kann das Ausstellercomputersystem beispielsweise über ein Endgerät oder direkt über eine kontaktlose oder kontaktbehaftete Kommunikationsverbindung auf das ID-Token zugreifen.

Beispielsweise empfängt das Ausstellercomputersystem die zweiten Attribute von einem Inspektions-Computersystem, welches die zweiten Attribute aus dem ID-Token ausliest. Beispielsweise ist das Ausstellercomputersystem selbst als Inspektions-Computersystem konfiguriert und liest die zweiten Attribute selbst aus dem ID-Token aus.

In Block 106 prüft das Ausstellercomputersystem das empfangene zumindest eine zweite identische Attribut auf eine Übereinstimmung mit dem empfangenen zumindest einen ersten identischen Attribut. Auf eine Übereinstimmung hin, stellt das Ausstellercomputersystem in Block 108 den digitale ID-Nachweise aus, welcher die empfangenen ersten und zweiten Attribute umfasst und unter Verwendung eines ersten Signaturschlüssels des Ausstellercomputersystems signiert ist.

In Block 110 sendet das Ausstellercomputersystem den ausgestellten ID-Nachweis in Antwort auf die Ausstellanfrage an das Endgerät. Beispielsweise sendet das Ausstellercomputersystem den ausgestellten ID-Nachweis zum Speichern an eine digitale Ausweiswallet des Endgeräts.

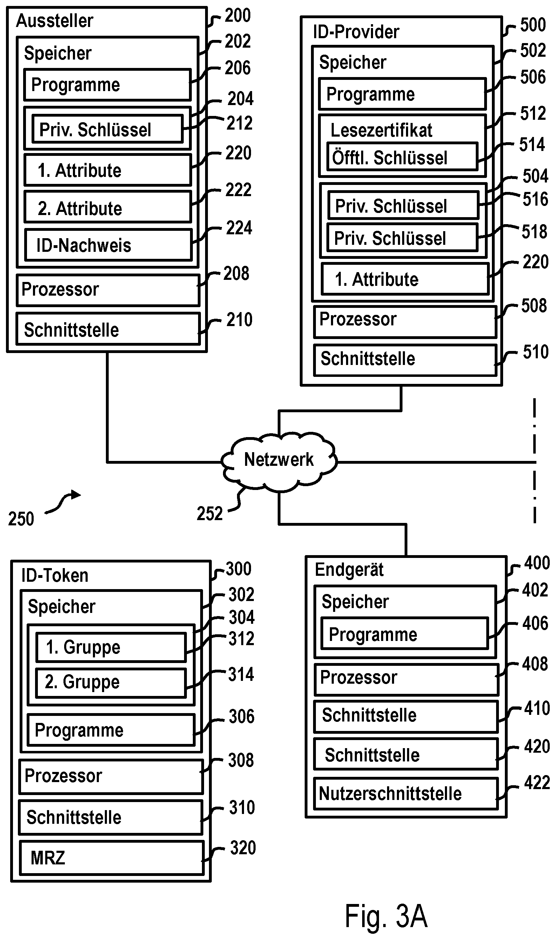

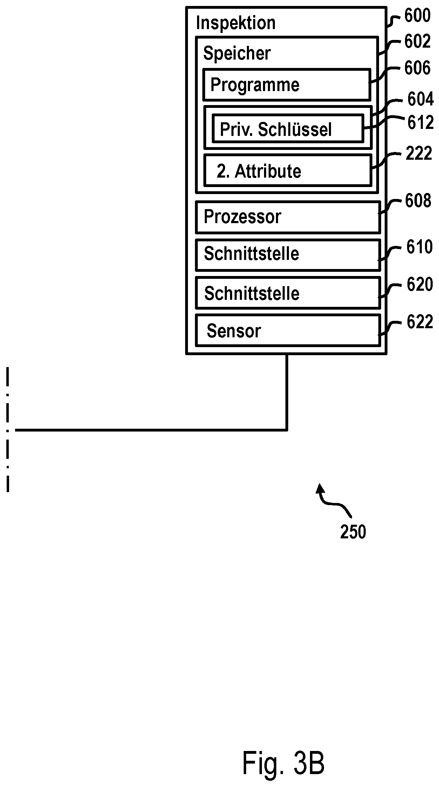

Figur 3A zeigt einen ersten Teil eines exemplarischen Systems 250 zum Bereitstellen eines digitalen ID-Nachweises 224 unter Verwendung eines elektronischen ID-Tokens 300. Figur 3B zeigt einen zweiten Teil des exemplarischen Systems 250 zum Bereitstellen des digitalen ID-Nachweises 224.

Das System 250 umfasst den ID-Token 300 und ein Ausstellercomputersystem 200. Ferner umfasst das System 250 beispielsweise ein ID-Provider-Computersystem 500, ein Inspektions-Computersystem 600 und ein Endgerät 400, insbesondere ein mobiles Endgerät. Der ID-Token 300 umfasst einen Prozessor 308 und einen Speicher 302 mit einem geschützten Speicherbereich 304. In dem geschützten Speicherbereich 304 ist eine erste Gruppe 312 von Attributen mit ersten Attributen eines Inhabers des ID-Tokens 300 gespeichert. Ferner ist in dem geschützten Speicherbereich 304 eine zweite Gruppe 314 von Attributen mit zweiten Attributen des Inhabers gespeichert. Der Speicher 302 umfasst ferner Programminstruktionen 306, welche beispielsweise zum Ausführen von ID-Funktionen des ID-Tokens 300 konfiguriert sind.

Die zweite Gruppe 314 von Attributen umfasst zweite identische Attribute, die jeweils zu einem ersten identischen Attribut der ersten Gruppe 312 von Attributen identisch sind. Die zweite Gruppe 314 von Attributen umfasst ferner ein oder mehrere zweite verschiedene Attribute, die verschieden sind von den ersten Attributen der ersten Gruppe 312 von Attributen. Die zweiten verschiedenen Attribute umfassen ein digitales Lichtbild des Inhabers des ID-Tokens 300.

Der elektronische ID-Token 300 umfasst einen physischen Körper mit einem maschinenlesbaren Bereich 320, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem geschützten Speicherbereich 304 gespeicherte erste Gruppe 312 von Attributen ist ein erfolgreiches Authentifizieren des Inhabers durch den ID-Token 300 und ein erfolgreiches Authentifizieren eines den entsprechenden Lesezugriff anfragenden Auslesecomputersystems, beispielsweise des ID-Provider-Computersystems 500, durch den ID-Token 300. Das erfolgreiche Authentifizieren des Auslesecomputersystems erfordert beispielsweise einen erfolgreichen Nachweis einer Leseberechtigung, etwa durch ein entsprechendes Lesezertifikat 512 einer PKl-Infrastruktur. Voraussetzung für einen Lesezugriff auf die in dem geschützten Speicherbereich 304 gespeicherte zweite Gruppe 314 von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs 320 berechenbar ist.

Schließlich umfasst der ID-Token 300 eine Kommunikationsschnittstelle 310 zur Kommunikation, insbesondere zur kontaktlosen Kommunikation, etwa über NFC. Beispielsweise dient die Kommunikationsschnittstelle 310 zur Kommunikation mit dem mobilen Endgerät 400 und/oder dem Inspektions-Computersystem 600.

Das Endgerät 400, bei welchem es sich beispielsweise um mobiles Endgerät, etwa ein Smartphone, handelt, umfasst einen Speicher 402 mit Programminstruktionen 406. Diese Programminstruktionen 406 umfassen beispielsweise eine Ausweiswallet. Ferner sind die Programminstruktionen 406 beispielsweise dazu konfiguriert, eine Kommunikationsverbindung zwischen dem ID-Provider-Computersystem 500 und ID-Token 300 herzustellen. Zudem sind die Programminstruktionen 406 beispielsweise dazu konfiguriert, eine Authentifizierung eines Inhabers der ID-Token 300 gegenüber dem ID-Token 300 über eine Nutzerschnittstelle 422 zu ermöglichen.

Ein Prozessor 408 des Endgeräts 400 ist dazu konfiguriert, bei einem Ausführen der Programminstruktionen 406 das mobile Endgerät 400 beispielsweise zum Anfragen eines Ausstellens eines ID-Nachweises bei dem Ausstellercomputersystem zu steuern. Ferner kann das Endgerät 400 beispielsweise über das Netzwerk 252 eine Verbindung zwischen dem ID-Token 300 und dem ID-Provider-Computersystem 500 herstellen. Schließlich kann der Prozessor 408 das Endgerät 400 beispielsweise dazu steuern eine Authentisierung des Inhabers des ID-Tokens 300 gegenüber dem ID-Token 300 zu ermöglichen. Hierzu umfasst das mobile Endgerät 400 die Kommunikationsschnittstelle 410 zur Kommunikation mit dem ID-Token 300, insbesondere kontaktlos, etwa über NFC. Zudem umfasst das mobile Endgerät 400 eine Kommunikationsschnittstelle 420 zur Kommunikation über das Netzwerk 252, etwa das Internet. Beispielsweise kommuniziert das mobile Endgerät 400 unter Verwendung der Kommunikationsschnittstelle 420 mit dem Ausstellercomputersystem 200 und/oder dem ID-Provider-Computersystem 500. Schließlich umfasst das mobile Endgerät 400 eine Nutzerschnittstelle 422 zum Interagieren eines Nutzers mit dem mobilen Endgerät 400. Beispielsweise umfasst die Nutzerschnittstelle 422 eine Eingabe- und eine Ausgabevorrichtung, beispielsweise ein Touchdisplay. Unter Verwendung der Eingabevorrichtung kann der Nutzer Daten und Befehle in das mobile Endgerät 400 eingeben. Unter Verwendung der Ausgabevorrichtung kann das mobile Endgerät 400 dem Nutzer Daten anzeigen. Beispielsweise ist die Nutzerschnittstelle 422 zum Empfangen von Authentisierungsdaten zum Authentisieren des Nutzers als der Inhaber des ID-Tokens 300 gegenüber dem ID-Token 300 konfiguriert. Beispielsweise umfassen die Authentisierungsdaten eine PIN, welche der Nutzer über die Nutzerschnittstelle 422 in das Endgerät 400 eingeben kann. Diese PIN oder ein daraus abgeleiteter Wert, etwa ein Hash oder eine verschlüsselte Form der PIN, wird von dem Endgerät 400 über die Kommunikationsschnittstelle 420 an den ID-Token 300 gesendet, welcher den Nutzer authentifiziert, indem der die empfangenen Daten unter Verwendung von hinterlegten Referenzdaten validiert. Beispielsweise umfasst die Nutzerschnittstelle 422 ein oder mehrere Sensoren, wie etwa eine Kamera oder ein Fingerabdruckscanner, zum Erfassen ein oder mehrerer biometrischer Authentifizierungsdaten zum Authentifizieren des Nutzers.

Ferner umfasst das System 250 ein ID-Provider-Computersystem 500 mit einem Speicher 502, welcher Programminstruktionen 506, wie etwa ein ID-Provider-Programm zum Auslesen von Attributen der ersten Gruppe 312 von Attributen aus dem ID-Token 300, umfasst. Ferner umfasst der Speicher 502 beispielsweise ein Lesezertifikat 512, etwa einer PKl-Infrastruktur, zum Nachweisen einer Leseberechtigung zum Lesen der ersten Gruppe 312 von Attributen gegenüber dem ID-Token 300. Das Lesezertifikat 512 umfasst beispielsweise einen öffentlichen kryptographischen Schlüssel 514. Ferner ist in einem geschützten Speicherbereich 504 des Speichers 502 ein zugehöriger privater kryptographischer Schlüssel 516 gespeichert. Beispielsweise kann das ID-Provider-Computersystem 500, etwa im Zuge eines Challenge-Response-Verfahrens, unter Verwendung des privaten kryptographischen Schlüssels 516 nachweisen, dass es der berechtigte Inhaber des Lesezertifikats 512 ist. Zum Ausführen des Auslesens von Attributen der ersten Gruppe 312 von Attributen aus dem ID-Token 300 umfasst das ID-Provider-Computersystem 500 einen Prozessor 508, welcher das ID-Provider-Computersystem 500 steuert, indem er die Programminstruktionen 506 ausführt. Schließlich umfasst das ID-Provider-Computersystem 500 eine Kommunikationsschnittstelle 510 zur Kommunikation über das Netzwerk 252, etwa zum Auslesen von ersten Attributen 220 der ersten Gruppe 312 von Attributen über das Endgerät 400 aus dem ID-Token 300 und/oder zum Weiterleiten der ausgelesenen Nutzerattribute 220 an das Ausstellercomputersystem 200.

Beispielsweise umfasst das ID-Provider-Computersystem 500 einen weiteren in dem geschützten Speicherbereich 504 des Speichers 502 gespeicherten privaten kryptographischen Schlüssel 518. Dieser weitere private kryptographische Schlüssel 518 dient beispielsweise als Signaturschlüssel zum Signieren der ausgelesenen ersten Attribute 220. Die mit diesem Signaturschlüssel 518 erzeugte Signatur kann beispielsweise mit einem zugehörigen Signaturprüfschlüssel, etwa einem zugehörigen öffentlichen kryptographischen Schlüssel (nicht gezeigt) validiert werden.

Zudem umfasst das System 250 ein Inspektions-Computersystem 600. Das Inspektions-Computersystem 600 wird beispielsweise in Form eines Terminals, d.h. eines Endgeräts, insbesondere eines ortfesten Endgeräts, bereitgestellt. Das Inspektions-Computersystem 600 umfasst einen Speicher 602, welcher Programminstruktionen 606, wie etwa ein Inspektions-Programm zum Auslesen von Attributen der zweiten Gruppe 314 von Attributen aus dem ID-Token 300, umfasst. Zu diesem Zweck umfasst das Inspektions-Computersystem 600 beispielsweise einen optoelektronischen Sensor 622 zum Erfassen der maschinenlesbaren Bereichs 320 des physischen Körpers des ID-Tokens 300. Ein Ausführen der Programminstruktionen 606 durch einen Prozessor 608 des Inspektions-Computersystems 600 veranlasst den Prozessor 608 beispielsweise dazu das Inspektions-Computersystem 600 zu steuern, mit dem optoelektronischen Sensor 622 ein oder mehrere optoelektronisch erfassbare ID-Token-spezifische Angaben und ein oder mehrere optoelektronisch erfassbare inhaberspezifische Angaben, welche der maschinenlesbare Bereich 320 des ID-Tokens 300 umfasst, zu erfassen. Die erfassten ein oder mehrerer der ID-Token-spezifischen Angaben und ein oder mehrerer der inhaberspezifischen Angaben des maschinenlesbaren Bereichs 320 werden zum Berechnen eines Zugriffsschlüssels verwendet.

Das Inspektions-Computersystem 600 umfasst ferner eine Kommunikationsschnittstelle 610 zur Kommunikation mit dem ID-Token 300, insbesondere kontaktlos, etwa über NFC. Unter Verwendung des berechneten Zugriffsschlüssels weist das Inspektions-Computersystem 600 eine Berechtigung zu einem Lesezugriff auf die Attribute der zweiten Gruppe 314 von Attributen des ID-Tokens 300 nach und liest diese über die Kommunikationsschnittstelle 610 aus. Die ausgelesenen zweiten Attribute 222, welche ein digitales Lichtbild des Inhabers des ID-Tokens umfassen, leitet das Inspektions-Computersystem 600 unter Verwendung einer Kommunikationsschnittstelle 622 zur Kommunikation über das Netzwerk 252 an das Ausstellercomputersystem 200 weiter.

Beispielsweise umfasst das Inspektions-Computersystem 600 einen in dem geschützten Speicherbereich 604 des Speichers 602 gespeicherten privaten kryptographischen Schlüssel 612. Dieser private kryptographische Schlüssel 612 dient beispielsweise als Signaturschlüssel zum Signieren der ausgelesenen zweiten Attribute 222. Die mit diesem Signaturschlüssel 612 erzeugte Signatur kann beispielsweise mit einem zugehörigen Signaturprüfschlüssel, etwa einem zugehörigen öffentlichen kryptographischen Schlüssel (nicht gezeigt) validiert werden.

Alternativerweise könnte auch das Endgerät 400 als Inspektions-Computersystem konfiguriert sein. Hierzu müssten die Programminstruktionen 406 beispielsweise Programminstruktionen eines Inspektions-Programms zum Auslesen der Attribute der zweiten Gruppe 314 von Attributen umfassen. Ferner müsste das Endgerät 400 einen optoelektronischen Sensor, etwa eine Kamera, zum Erfassen des maschinenlesbaren Bereichs 320 des ID-Tokens 300 umfassen.

Das Ausstellercomputersystem 200 umfasst einen Prozessor 208 und einen Speicher 202 mit maschinenlesbaren Programminstruktionen 206. Ein Ausführen der Programminstruktionen 206 durch den Prozessor 208 veranlasst das Ausstellercomputersystem 200 zum Bereitstellen des ID-Nachweises 224. Beispielsweise umfasst das Ausstellercomputersystem 200 eine Kommunikationsschnittstelle 210 zur Kommunikation über das Netzwerk 252 mit dem ID-Provider-Computersystem 500 und dem Inspektions-Computersystem 600. Ferner kann das Ausstellercomputersystem 200 beispielsweise mit dem Endgerät 400 kommunizieren.

Ein Ausführen der Programminstruktionen 206 durch den Prozessor 208 veranlasst das Ausstellercomputersystem 200 insbesondere zum Empfangen mehrerer im Zuge eines ersten Auslesevorgangs durch einen ersten Lesezugriff auf die erste Gruppe 312 von Attributen aus dem ID-Token 300 ausgelesener erster Attribute 220 durch ein Ausstellercomputersystem 200. Die ersten Attribute 220 werden beispielsweise durch das ID-Provider-Computersystem 500 aus dem ID-Token 300 über das Netzwerk 252 und das Endgerät 400 ausgelesen. Hierzu sendet das Ausstellercomputersystem 200 beispielsweise eine erste Leseanfrage an das ID-Provider-Computersystem 500. Diese erste Leseanfrage wird beispielsweise über das Netzwerk 252 gesendet, mit oder ohne Einbindung des Endgeräts 400. Das ID-Provider-Computersystem 500 stellt daraufhin über Endgerät 400 einen Kommunikationsverbindung mit dem ID-Token 300 her und authentisiert sich unter Verwendung des Lesezertifikats 512 gegenüber dem ID-Token 300. Beispielsweise erfolgt zudem eine Authentisierung eines Nutzers des Endgeräts 400 gegenüber dem ID-Token 300 als der Inhaber des ID-Tokens 300. Wenn alle Zugriffsvoraussetzungen für einen Lesezugriff auf die erste Gruppe 312 von Attributen erfüllt sind, liest das ID-Provider-Computersystem 500 die ersten Attribute 220 aus der ersten Gruppe 312 von Attributen aus und leitet diese über das Netzwerk 252 an das Ausstellercomputersystem 200 weiter. Das Weiterleiten erfolgt beispielsweise mit oder ohne Einbindung des Endgeräts 400.

Mehrere im Zuge eines zweiten Auslesevorgangs durch einen zweiten Lesezugriff auf die zweite Gruppe 314 von Attributen aus dem ID-Token ausgelesene zweite Attribute 222 werden durch das Ausstellercomputersystem 200 empfangen. Die zweiten Attribute 222 werden beispielsweise durch das Inspektions-Computersystem 600 aus dem ID-Token 300 über eine Kommunikationsverbindung zwischen den Kommunikationsschnittstellen 610 und 310, beispielsweise über eine NFC-Kommunikationsverbindung, ausgelesen. Hierzu sendet das Ausstellercomputersystem 200 beispielsweise eine zweite Leseanfrage an das Inspektions-Computersystem 600. Diese zweite Leseanfrage wird beispielsweise über das Netzwerk 252 gesendet, mit oder ohne Einbindung des Endgeräts 400. Das Inspektions-Computersystem 600 stellt die Kommunikationsverbindung mit dem ID-Token 300 her und authentisiert sich unter Verwendung des Zugriffsschlüssels gegenüber dem ID-Token 300. Hierzu erfasst das Inspektions-Computersystem 600 beispielsweise den maschinenlesbarem Bereich 320 des physischen Körpers des ID-Tokens 300 und berechnet unter Verwendung der von dem maschinenlesbaren Bereich umfassten Angaben den Zugriffsschlüssel. Wenn alle Zugriffsvoraussetzungen für einen Lesezugriff auf die zweite Gruppe 314 von Attributen erfüllt sind, liest das Inspektions-Computersystem 600 die zweiten Attribute 222 aus der zweiten Gruppe 314 von Attributen aus und leitet diese über das Netzwerk 252 an das Ausstellercomputersystem 200 weiter. Das Weiterleiten erfolgt beispielsweise mit oder ohne Einbindung des Endgeräts 400.

Die empfangenen zweiten Attribute 222 umfassen zumindest das digitale Lichtbild des Inhabers und zweite identische Attribute, die jeweils zu einem der empfangenen ersten identischen Attribute identisch sind. Die empfangenen ersten Attribute 220 umfassen ferner zumindest ein von den empfangenen zweiten Attributen 222 verschiedenes erstes Attribut. Das empfangene zumindest eine zweite identische Attribut wird durch das Ausstellercomputersystem 200 auf eine Übereinstimmung mit dem empfangenen zumindest einen ersten identischen Attribut geprüft. Auf eine Übereinstimmung hin, wird der digitale ID-Nachweis 224 durch das Ausstellercomputersystem 200 ausgestellt, welcher die empfangenen ersten und zweiten Attribute umfasst und unter Verwendung des ersten Signaturschlüssels 212 des Ausstellercomputersystems 200 signiert ist.

Beispielsweise wird das Ausstellen des ID-Nachweises 224 durch das Endgerät 400 des Inhabers des ID-Tokens 300 initiiert. Beispielsweise empfängt das Ausstellercomputersystem 200 eine Ausstellanfrage zum Ausstellen des ID-Nachweis 224 von einem Endgerät 400 des Inhabers des ID-Tokens 300, worauf es mit dem Ausstellen des ID-Nachweises 224 beginnt bzw. damit beginnt, sich Zugriff auf die ersten und zweiten Attribute 220,222 aus dem ID-Token zu verschaffen. Beispielsweise spezifiziert die Ausstellanfrage, dass der auszustellende ID-Nachweis 224 ein digitales Lichtbild des Inhabers des ID-Tokens 300 umfassen soll. Das Ausstellercomputersystem 200 sendet am Ende den ausgestellten ID-Nachweis 224 in Antwort auf die Ausstellanfrage an das Endgerät 300.

Beispielsweise sendet das Ausstellercomputersystem 200 den ausgestellten ID-Nachweis 224 zum Speichern an eine digitale Ausweiswallet des Endgeräts 400. Die digitale Ausweiswallet wird beispielsweise als Programm durch die Programminstruktionen 406 auf dem Endgerät 400 implementiert. Beispielsweise umfasst der Speicher 402 des Endgeräts 400 einen geschützten Speicherbereich, welcher der digitalen Ausweiswallet zugeordnet ist und in dem der empfangene ID-Nachweis 224 gespeichert wird. Der ID-Nachweis 224 kann in der digitalen Ausweiswallet des Endgeräts 400 bzw. in einem der digitalen Ausweiswallet zugeordneten Speicherbereich des Speichers 402 gespeichert und von der digitalen Ausweiswallet beispielsweise zu Identifikationszwecken verwendet werden.

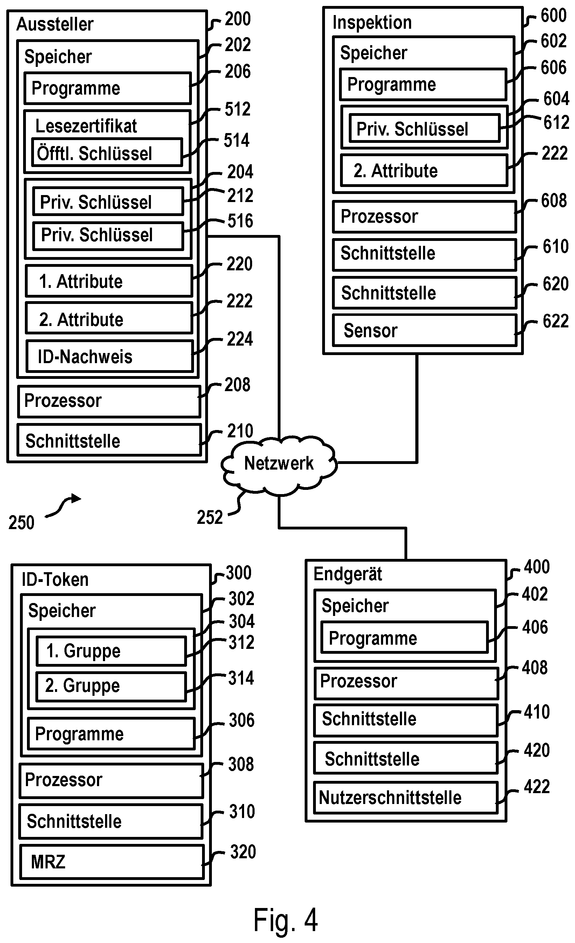

Figur 4 zeigt ein exemplarisches System 250 zum Bereitstellen eines digitalen ID-Nachweises 224, welches sich von dem System 250 der Figuren 3A und 3B dadurch unterscheidet, dass kein eigenständiges ID-Provider-Computersystem vorgesehen ist. Im Falle Figur 4 ist vielmehr das Ausstellercomputersystem 200 selbst als ein ID-Provider-Computersystem konfiguriert. Hierzu umfassen die Programminstruktionen 206 des Ausstellercomputersystem 200 der Figur 4 beispielsweise Programminstruktionen eines ID-Provider-Programm zum Auslesen der ersten Attribute 220 aus der ersten Gruppe 312 von Attributen des ID-Tokens 300. Ferner umfasst das Ausstellercomputersystem 200 der Figur 4 im Vergleich zu dem Ausstellercomputersystem 200 der Figur 3A beispielsweise in dem Speicher 202 ein Lesezertifikat 512, etwa einer PKI-Infrastruktur, zum Nachweisen einer Leseberechtigung des Ausstellercomputersystems 200 zum Lesen der ersten Gruppe 312 von Attributen gegenüber dem ID-Token 300. Das Lesezertifikat 512 umfasst beispielsweise einen öffentlichen kryptographischen Schlüssel 514. Ferner ist in dem geschützten Speicherbereich 204 des Speichers 202 beispielsweise ein zugehöriger privater kryptographischer Schlüssel 516 gespeichert. Beispielsweise kann das Ausstellercomputersystem 200, etwa im Zuge eines Challenge-Response-Verfahrens, unter Verwendung des privaten kryptographischen Schlüssels 516 nachweisen, dass es der berechtigte Inhaber des Lesezertifikats 512 ist.

Das Ausstellercomputersystem 200 empfängt die ersten Attribute 220 beispielsweise dadurch, dass es selbst über das Netzwerk 252 und das Endgerät 400 einen Lesezugriff auf die erste Gruppe 312 von Attributen des ID-Tokens 300 ausführt. Das Ausstellercomputersystem 200 stellt beispielsweise über Endgerät 400 eine Kommunikationsverbindung mit dem ID-Token 300 her und authentisiert sich unter Verwendung des Lesezertifikats 512 gegenüber dem ID-Token 300. Beispielsweise erfolgt zudem eine Authentisierung eines Nutzers des Endgeräts 400 gegenüber dem ID-Token 300 als der Inhaber des ID-Tokens 300. Wenn alle Zugriffsvoraussetzungen für einen Lesezugriff auf die erste Gruppe 312 von Attributen erfüllt sind, liest das Ausstellercomputersystem 200 die ersten Attribute 220 aus der ersten Gruppe 312 von Attributen aus.

Der ID-Token 300 in Figur 4 entspricht beispielsweise dem ID-Token 300 in Figur 3A. Das System 250 der Figur 4 umfasst neben dem ID-Token 300 und dem Ausstellercomputersystem 200, welches zugleich als ID-Provider-Computersystem konfiguriert ist, ein Inspektions-Computersystem 600 und ein Endgerät 400, insbesondere ein mobiles Endgerät. Das Inspektions-Computersystem 600 in Figur 4 entspricht beispielsweise dem Inspektions-Computersystem 600 in Figur 3B. Das Endgerät 400 in Figur 4 entspricht beispielsweise dem Endgerät 400 in Figur 3A.

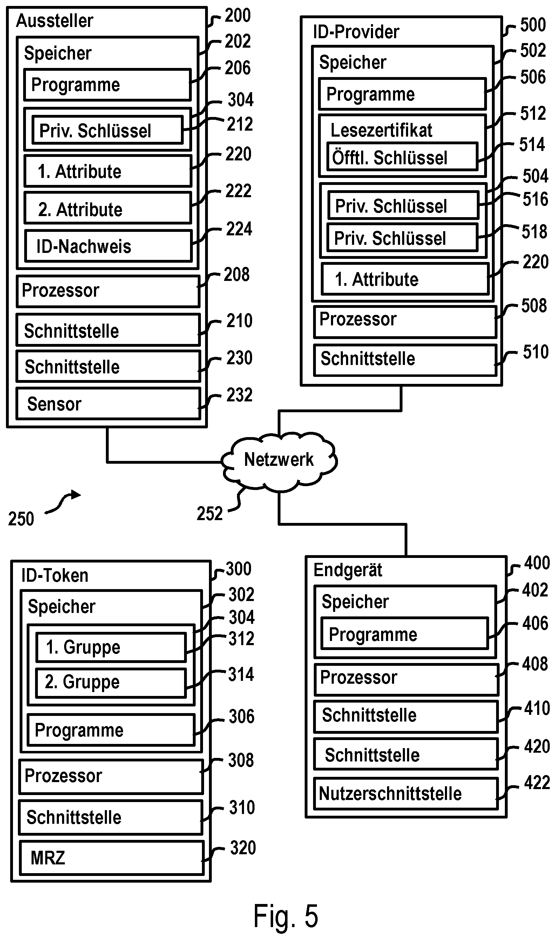

Figur 5 zeigt ein exemplarisches System 250 zum Bereitstellen eines digitalen ID-Nachweises 224, welches sich von dem System 250 der Figuren 3A und 3B dadurch unterscheidet, dass kein eigenständiges Inspektions-Computersystem vorgesehen ist. Im Falle Figur 5 ist vielmehr das Ausstellercomputersystem 200 selbst als ein Inspektions-Computersystem konfiguriert. Hierzu umfassen die Programminstruktionen 206 des Ausstellercomputersystem 200 der Figur 5 beispielsweise Programminstruktionen eines Inspektions-Programms zum Auslesen der zweiten Attribute 222 aus der zweiten Gruppe 314 von Attributen des ID-Tokens 300. Ferner umfasst das Ausstellercomputersystem 200 der Figur 5 im Vergleich zu dem Ausstellercomputersystem 200 der Figur 3A beispielsweise einen optoelektronischen Sensor 232 zum Erfassen der maschinenlesbaren Bereichs 320 des physischen Körpers des ID-Tokens 300. Ein Ausführen der Programminstruktionen 206 durch einen Prozessor 208 des Ausstellercomputersystems 200 veranlasst den Prozessor 208 beispielsweise dazu das Ausstellercomputersystem 200 zu steuern, mit dem optoelektronischen Sensor 622 ein oder mehrere optoelektronisch erfassbare ID-Token-spezifische Angaben und ein oder mehrere optoelektronisch erfassbare inhaberspezifische Angaben, welche der maschinenlesbare Bereich 320 des ID-Tokens 300 umfasst, zu erfassen. Die erfassten ein oder mehrerer der ID-Token-spezifischen Angaben und ein oder mehrerer der inhaberspezifischen Angaben des maschinenlesbaren Bereichs 320 werden zum Berechnen eines Zugriffsschlüssels verwendet.

Das Ausstellercomputersystem 200 umfasst ferner eine Kommunikationsschnittstelle 230 zur Kommunikation mit dem ID-Token 300, insbesondere kontaktlos, etwa über NFC. Unter Verwendung des berechneten Zugriffsschlüssels weist das Ausstellercomputersystem 200 eine Berechtigung zu einem Lesezugriff auf die Attribute der zweiten Gruppe 314 von Attributen des ID-Tokens 300 nach und liest diese über die Kommunikationsschnittstelle 230 aus.

Das Empfangen der zweiten Attribute 222 erfolgt mithin durch einen Lesezugriff des Ausstellercomputersystems 200 selbst auf den ID-Token 300.

Der ID-Token 300 in Figur 5 entspricht beispielsweise dem ID-Token 300 in Figur 3A. Das System 250 der Figur 5 umfasst neben dem ID-Token 300 und dem Ausstellercomputersystem 200, welches zugleich als Inspektions-Computersystem konfiguriert ist, ein ID-Provider-Computersystem 500 und ein Endgerät 400, insbesondere ein mobiles Endgerät. Das ID-Provider-Computersystem 500 in Figur 5 entspricht beispielsweise dem ID-Provider-Computersystem 500 in Figur 3A. Das Endgerät 400 in Figur 5 entspricht beispielsweise dem Endgerät 400 in Figur 3A.

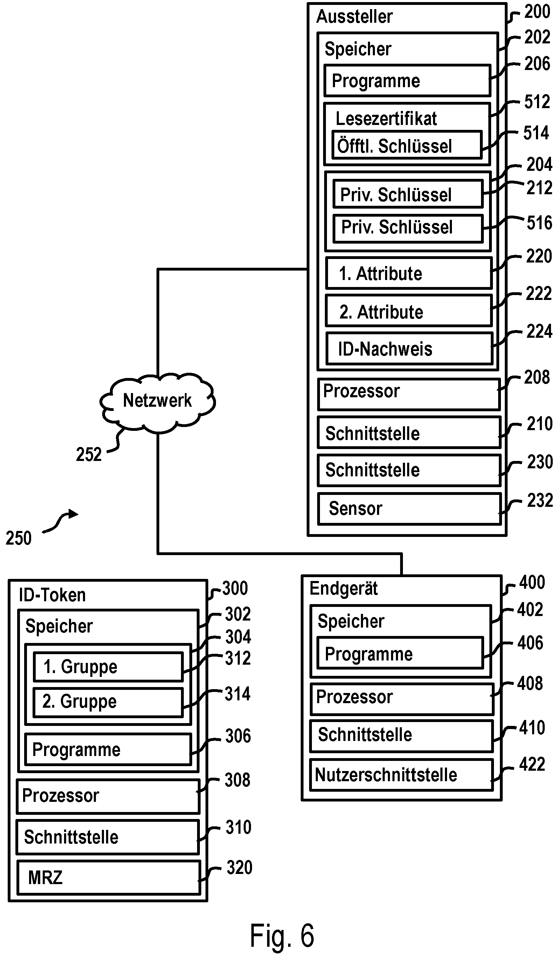

Figur 6 zeigt ein exemplarisches System 250 zum Bereitstellen eines digitalen ID-Nachweises 224, welches sich von dem System 250 der Figuren 3A und 3B dadurch unterscheidet, dass weder ein eigenständiges ID-Provider-Computersystem noch ein eigenständiges Inspektions-Computersystem vorgesehen ist. Im Falle Figur 6 ist vielmehr das Ausstellercomputersystem 200 selbst als ein ID-Provider-Computersystem und ein Inspektions-Computersystem konfiguriert. Hierzu umfassen die Programminstruktionen 206 des Ausstellercomputersystem 200 der Figur 6 beispielsweise Programminstruktionen eines ID-Provider-Programms zum Auslesen der ersten Attribute 220 aus der ersten Gruppe 312 von Attributen des ID-Tokens 300 und eines Inspektions-Programms zum Auslesen der zweiten Attribute 222 aus der zweiten Gruppe 314 von Attributen des ID-Tokens 300.

Das Ausstellercomputersystem 200 der Figur 6 umfasst im Vergleich zu dem Ausstellercomputersystem 200 der Figur 3A beispielsweise in dem Speicher 202 ein Lesezertifikat 512, etwa einer PKI-Infrastruktur, zum Nachweisen einer Leseberechtigung des Ausstellercomputersystems 200 zum Lesen der ersten Gruppe 312 von Attributen gegenüber dem ID-Token 300. Das Lesezertifikat 512 umfasst beispielsweise einen öffentlichen kryptographischen Schlüssel 514. Ferner ist in dem geschützten Speicherbereich 204 des Speichers 202 beispielsweise ein zugehöriger privater kryptographischer Schlüssel 516 gespeichert. Beispielsweise kann das Ausstellercomputersystem 200, etwa im Zuge eines Challenge-Response-Verfahrens, unter Verwendung des privaten kryptographischen Schlüssels 516 nachweisen, dass es der berechtigte Inhaber des Lesezertifikats 512 ist.

Das Ausstellercomputersystem 200 empfängt die ersten Attribute 220 beispielsweise dadurch, dass es selbst einen Lesezugriff auf die erste Gruppe 312 von Attributen des ID-Tokens 300 ausführt. Dieser Zugriff kann beispielsweise über das Endgerät 400 oder direkt durch das Ausstellercomputersystem 200 erfolgen. In letzterem Fall stellt das Ausstellercomputersystem 200 beispielsweise unter Verwendung einer zusätzlichen Kommunikationsschnittstelle 230 eine direkte Kommunikationsverbindung mit dem ID-Token 300, insbesondere eine kontaktlose Kommunikationsverbindung her. Bei der kontaktlosen Kommunikationsverbindung handelt es sich beispielsweise um eine Kommunikationsverbindung über NFC. Das Ausstellercomputersystem 200 authentisiert sich unter Verwendung des Lesezertifikats 512 gegenüber dem ID-Token 300. Beispielsweise erfolgt zudem eine Authentisierung eines Nutzers über das Endgerät 400 oder über das Ausstellercomputersystem 200 gegenüber dem ID-Token 300 als der Inhaber des ID-Tokens 300. In letzterem Fall umfasst das Ausstellercomputersystem 200 beispielsweise eine Nutzerschnittstelle zum Erfassen von Authentifizierungsdaten des Nutzers, wie etwa einer PIN. Wenn alle Zugriffsvoraussetzungen für einen Lesezugriff auf die erste Gruppe 312 von Attributen erfüllt sind, liest das Ausstellercomputersystem 200 die ersten Attribute 220 aus der ersten Gruppe 312 von Attributen aus.

Ferner umfasst das Ausstellercomputersystem 200 der Figur 6 im Vergleich zu dem Ausstellercomputersystem 200 der Figur 3A beispielsweise einen optoelektronischen Sensor 232 zum Erfassen der maschinenlesbaren Bereichs 320 des physischen Körpers des ID-Tokens 300. Ein Ausführen der Programminstruktionen 206 durch einen Prozessor 208 des Ausstellercomputersystems 200 veranlasst den Prozessor 208 beispielsweise dazu das Ausstellercomputersystem 200 zu steuern, mit dem optoelektronischen Sensor 622 ein oder mehrere optoelektronisch erfassbare ID-Token-spezifische Angaben und ein oder mehrere optoelektronisch erfassbare inhaberspezifische Angaben, welche der maschinenlesbare Bereich 320 des ID-Tokens 300 umfasst, zu erfassen. Die erfassten ein oder mehrerer der ID-Token-spezifischen Angaben und ein oder mehrerer der inhaberspezifischen Angaben des maschinenlesbaren Bereichs 320 werden zum Berechnen eines Zugriffsschlüssels verwendet.

Unter Verwendung des berechneten Zugriffsschlüssels weist das Ausstellercomputersystem 200 eine Berechtigung zu einem Lesezugriff auf die Attribute der zweiten Gruppe 314 von Attributen des ID-Tokens 300 nach und liest diese über die Kommunikationsschnittstelle 230 aus. Das Empfangen der zweiten Attribute 222 erfolgt mithin durch einen Lesezugriff des Ausstellercomputersystems 200 selbst auf den ID-Token 300.

Der ID-Token 300 in Figur 6 entspricht beispielsweise dem ID-Token 300 in Figur 3A. Das System 250 der Figur 6 umfasst neben dem ID-Token 300 und dem Ausstellercomputersystem 200, welches zugleich als ID-Provider-Computersystem und als Inspektions-Computersystem konfiguriert ist, beispielsweise noch ein Endgerät 400, insbesondere ein mobiles Endgerät. Das Endgerät 400 in Figur 6 entspricht beispielsweise dem Endgerät 400 in Figur 3A.

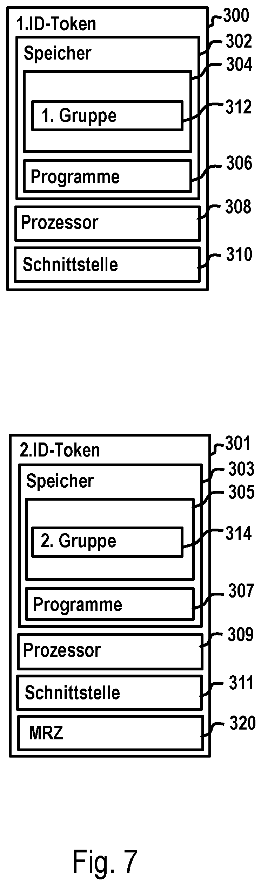

Figur 7 zeigt einen ersten elektronischen ID-Token und einen zweiten elektronischen ID-Token zum Bereitstellen eines digitalen ID-Nachweises.

Der erste ID-Token 300 umfasst einen ersten Prozessor 308 und einen ersten Speicher 302 mit einem ersten geschützten Speicherbereich 304. In dem ersten geschützten Speicherbereich 304 ist eine erste Gruppe 312 von Attributen mit ersten Attributen eines Inhabers des ersten ID-Tokens 300 gespeichert. Der erste Speicher 302 umfasst ferner erste Programminstruktionen 306, welche beispielsweise zum Ausführen von ID-Funktionen des ersten ID-Tokens 300 konfiguriert sind.

Voraussetzung für einen Lesezugriff auf die in dem ersten geschützten Speicherbereich 304 gespeicherte erste Gruppe 312 von Attributen ist ein erfolgreiches Authentifizieren des Inhabers durch den ersten ID-Token 300 und ein erfolgreiches Authentifizieren eines den entsprechenden Lesezugriff anfragenden Auslesecomputersystems durch den ersten ID-Token 300. Das erfolgreiche Authentifizieren des Auslesecomputersystems erfordert beispielsweise einen erfolgreichen Nachweis einer Leseberechtigung, etwa durch ein entsprechendes Lesezertifikat einer PKl-Infrastruktur.

Schließlich umfasst der erste ID-Token 300 eine erste Kommunikationsschnittstelle 310 zur Kommunikation, insbesondere zur kontaktlosen Kommunikation, etwa über NFC. Beispielsweise dient die erste Kommunikationsschnittstelle 310 zur Kommunikation mit dem mobilen Endgerät und/oder dem Inspektions-Computersystem.

Der zweite ID-Token 301 umfasst einen zweiten Prozessor 309 und einen zweiten Speicher 303 mit einem zweiten geschützten Speicherbereich 305. In dem zweiten geschützten Speicherbereich 305 ist eine zweite Gruppe 314 von Attributen mit zweiten Attributen des Inhabers des zweiten ID-Tokens 301 gespeichert. Der zweite Speicher 303 umfasst ferner zweite Programminstruktionen 307, welche beispielsweise zum Ausführen von ID-Funktionen des zweiten ID-Tokens 301 konfiguriert sind. Beide ID-Tokens 300, 301 sind demselben Inhaber zugeordnet.

Die zweite Gruppe 314 von Attributen umfasst zweite identische Attribute, die jeweils zu einem ersten identischen Attribut der ersten Gruppe 312 von Attributen identisch sind. Die zweite Gruppe 314 von Attributen umfasst ferner ein oder mehrere zweite verschiedene Attribute, die verschieden sind von den ersten Attributen der ersten Gruppe 312 von Attributen. Die zweiten verschiedenen Attribute umfassen ein digitales Lichtbild des Inhabers des zweiten ID-Tokens 301.

Der zweite elektronische ID-Token 301 umfasst einen physischen Körper mit einem maschinenlesbaren Bereich 320, welcher ein oder mehrere optoelektronisch erfassbare ID-Token-spezifische Angaben und ein oder mehrere optoelektronisch erfassbare inhaberspezifische Angaben umfasst.

Voraussetzung für einen Lesezugriff auf die in dem zweiten geschützten Speicherbereich 305 gespeicherte zweite Gruppe 314 von Attributen ist eine Verwendung eines Zugriffschlüssels, welcher unter Verwendung ein oder mehrerer der ID-Token-spezifischen Angaben und ein oder mehrerer der inhaberspezifischen Angaben des maschinenlesbaren Bereichs 320 berechenbar ist.

Schließlich umfasst der zweite ID-Token 301 eine zweite Kommunikationsschnittstelle 311 zur Kommunikation, insbesondere zur kontaktlosen Kommunikation, etwa über NFC. Beispielsweise dient die zweite Kommunikationsschnittstelle 311 zur Kommunikation mit dem mobilen Endgerät und/oder dem Inspektions-Computersystem.

Obwohl die Erfindung in den Zeichnungen und der vorstehenden Beschreibung ausführlich veranschaulicht und beschrieben ist, ist diese Veranschaulichung und Beschreibung als beispielhaft und nicht einschränkend zu betrachten; die Erfindung ist nicht auf die offenbarten Ausführungsformen beschränkt.

Unter einem elektronischen "ID-Token" wird hier ein tragbares elektronisches Gerät verstanden, zum Beispiel eine Chipkarte oder ein Dokument, auf welchem Nutzerattribute eines Nutzers in digitaler Form unter Verwendung von elektronischen Komponenten gespeichert sind. Unter einem "Dokument" wird insbesondere ein Ausweis-, Wert- oder Sicherheitsdokument verstanden, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder ein anderes ID-Dokument, eine Chipkarte, Zahlungsmittel, insbesondere Banknote, Bankkarte oder Kreditkarte, Frachtbrief oder ein sonstiger Berechtigungsnachweis. Insbesondere kann es sich bei dem ID-Token um ein Machine-Readable Travel Document, wie beispielsweise von der Internationalen Luftfahrtbehörde (ICAO) und/oder dem Bundesamt für Sicherheit in der Informationstechnik (BSI) standardisiert, handeln.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "flüchtigen elektronischen Speicher" wird hier ein Speicher zur vorübergehenden Speicherung von Daten, insbesondere von ephemeren kryptographischen Schlüsseln oder gemeinsamen, geteilten Geheimnissen, verstanden, welcher dadurch gekennzeichnet ist, dass alle gespeicherten Daten nach dem Abschalten der Energieversorgung verloren gehen. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem "geschützten Speicherbereich" wird hier ein Bereich eines elektronischen Speichers verstanden, auf den ein Zugriff, das heißt ein Lesezugriff oder ein Schreibzugriff, von einem mit dem Speicher gekoppelten Prozessor nur dann ermöglicht wird, wenn eine hierzu erforderliche Bedingung erfüllt ist. Hierbei kann es sich zum Beispiel um eine kryptographische Bedingung, insbesondere eine erfolgreiche Authentifizierung und/oder eine erfolgreiche Berechtigungsprüfung, handeln.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselte Ende-zu-Ende-Verbindungen. Unter einer "verschlüsselten Ende-zu-Ende-Verbindung" bzw. einem "verschlüsselten Ende-zu-Ende-Kommunikationskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, so dass Zwischenstationen aufgrund der Verschlüsslung keine Kenntnis vom Inhalt der übertragenen Daten erlangen können. Die Verbindung wird durch die Verschlüsselung kryptographisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTPS) Protokolls.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen kryptographischen Schlüssel, welcher zur Ver- und/oder Entschlüsselung von Daten verwendet wird und an Dritte, beispielsweise an einen Sender oder Empfänger von Daten, weitergegeben werden darf, sowie einem privaten kryptographischen Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten kryptographischen Schlüssels zu verschlüsseln oder mit dem privaten kryptographischen Schlüssel erstellte digitale Signaturen zu prüfen. Ein privater Schlüssel ermöglicht es seinem Inhaber mit dem öffentlichen kryptographischen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen kryptographischen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnete Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen kryptographischen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikatausstellers zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen kryptographischen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen kryptographischen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen kryptographischen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen kryptographischen Schlüssel der Allgemeinheit zur Verfügung stellt, ermöglicht sie es den Nutzern asymmetrischer Kryptosysteme den öffentlichen kryptographischen Schlüssel einer Identität, beispielsweise einer Person, einer Organisation, oder Computersystem, zuzuordnen.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device bzw. ein anderes Smart-Wearable, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem mobilen Endgerät wird beispielsweise ein mobiles tragbares Kommunikationsgerät, wie etwa ein Smartphone, ein Tablet, ein Laptop, oder ein Smart-Wearable, wie etwa Smart-Glasses oder eine Smartwatch, verstanden.

### LISTE DER BEZUGSZEICHEN

- 200: Ausstellercomputersystem
- 202: Speicher
- 204: geschützter Speicherbereich
- 206: Programminstruktionen
- 208: Prozessor
- 210: Kommunikationsschnittstelle
- 212: privater Schlüssel
- 220: erste Attribute
- 222: zweite Attribute
- 224: ID-Nachweis
- 230: Kommunikationsschnittstelle
- 232: optoelektronischer Sensor
- 250: Netzwerk
- 252: System
- 300: ID-Token
- 301: ID-Token
- 302: Speicher
- 303: Speicher
- 304: geschützter Speicherbereich
- 305: geschützter Speicherbereich
- 306: Programminstruktionen
- 307: Programminstruktionen
- 308: Prozessor
- 309: Prozessor
- 310: Kommunikationsschnittstelle
- 311: Kommunikationsschnittstelle
- 312: erste Gruppe von Attributen
- 314: zweite Gruppe von Attributen
- 320: maschinenlesbarer Bereich
- 400: Endgerät
- 402: Speicher
- 406: Programminstruktionen
- 408: Prozessor
- 410: Kommunikationsschnittstelle
- 420: Kommunikationsschnittstelle
- 422: Nutzerschnittstelle
- 500: ID-Provider-Computersystem
- 502: Speicher
- 504: geschützter Speicherbereich
- 506: Programminstruktionen
- 508: Prozessor
- 510: Kommunikationsschnittstelle
- 512: Lesezertifikat
- 514: öffentlicher Schlüssel
- 516: privater Schlüssel
- 518: privater Schlüssel
- 600: Inspektions-Computersystem
- 602: Speicher
- 604: geschützter Speicherbereich
- 606: Programminstruktionen
- 608: Prozessor
- 610: Kommunikationsschnittstelle
- 612: privater Schlüssel
- 620: Kommunikationsschnittstelle
- 622: optoelektronischer Sensor

## Patentansprüche

1. Verfahren zum Bereitstellen eines digitalen ID-Nachweises (224) unter Verwendung eines elektronischen ID-Tokens (300), wobei der ID-Token (300) einen Prozessor (308) und einen Speicher (302) mit einem geschützten Speicherbereich (304) umfasst,
wobei in dem geschützten Speicherbereich (304) eine erste Gruppe (312) von Attributen mit ersten Attributen eines Inhabers des ID-Tokens (300) gespeichert ist, wobei in dem geschützten Speicherbereich (304) ferner eine zweite Gruppe (314) von Attributen mit zweiten Attributen des Inhabers gespeichert ist,
wobei die zweite Gruppe (314) von Attributen zweite identische Attribute umfasst, die jeweils zu einem ersten identischen Attribut der ersten Gruppe (312) von Attributen identisch sind, wobei die zweite Gruppe (314) von Attributen ferner ein oder mehrere zweite verschiedene Attribute umfasst, die verschieden sind von den ersten Attributen der ersten Gruppe (312) von Attributen, wobei die zweiten verschiedenen Attribute ein digitales Lichtbild des Inhabers umfassen,
wobei der elektronische ID-Token (300) einen physischen Körper mit einem maschinenlesbaren Bereich (320) umfasst, welcher ein oder mehrere optoelektronisch erfassbare ID-Token-spezifische Angaben und ein oder mehrere optoelektronisch erfassbare inhaberspezifische Angaben umfasst,
wobei Voraussetzung für einen Lesezugriff auf die in dem geschützten Speicherbereich (304) gespeicherte erste Gruppe (312) von Attributen ein erfolgreiches Authentifizieren des Inhabers durch den ID-Token (300) und ein erfolgreiches Authentifizieren eines den entsprechenden Lesezugriff anfragenden Auslesecomputersystems durch den ID-Token (300) ist,
wobei Voraussetzung für einen Lesezugriff auf die in dem geschützten Speicherbereich (304) gespeicherte zweite Gruppe (314) von Attributen eine Verwendung eines Zugriffschlüssels ist, welcher unter Verwendung ein oder mehrerer der ID-Token-spezifischen Angaben und ein oder mehrerer der inhaberspezifischen Angaben des maschinenlesbaren Bereichs (320) berechenbar ist,
wobei das Verfahren umfasst:
Empfangen mehrerer im Zuge eines ersten Auslesevorgangs durch einen ersten Lesezugriff auf die erste Gruppe (312) von Attributen aus dem ID-Token (300) ausgelesener erster Attribute (220) durch ein Ausstellercomputersystem (200),
Empfangen mehrerer im Zuge eines zweiten Auslesevorgangs durch einen zweiten Lesezugriff auf die zweite Gruppe (314) von Attributen aus dem ID-Token (300) ausgelesener zweiter Attribute (222) durch das Ausstellercomputersystem (200), wobei die empfangenen zweiten Attribute zumindest das digitale Lichtbild des Inhabers und zweite identische Attribute umfassen, die jeweils zu einem der empfangenen ersten identischen Attribute identisch sind, wobei die empfangenen ersten Attribute ferner zumindest ein von den empfangenen zweiten Attributen verschiedenes erstes Attribut umfassen,
Prüfen des empfangenen zumindest einen zweiten identischen Attributs auf eine Übereinstimmung mit dem empfangenen zumindest einen ersten identischen Attribut durch das Ausstellercomputersystem (200),
auf eine Übereinstimmung hin, Ausstellen des digitalen ID-Nachweises (224) durch das Ausstellercomputersystem (200), welcher die empfangenen ersten und zweiten Attribute umfasst sowie kryptographische Sicherungsdaten des Ausstellercomputersystems (200), welche eine Validierung des digitalen ID-Nachweises (224) ermöglichen.

2. Verfahren nach Anspruch 1, wobei die empfangenen zweiten identischen Attribute den Inhaber eindeutig identifizieren und/oder
wobei die kryptographischen Sicherungsdaten eine unter Verwendung eines ersten Signaturschlüssels (212) des Ausstellercomputersystems (200) erstellte Signatur des digitalen ID-Nachweises (224) umfassen oder wobei die kryptographischen Sicherungsdaten Daten einer authentifizierenden Verschlüsselung des digitalen ID-Nachweises (224) umfassen.

3. Verfahren nach einem der vorangehenden Ansprüche, wobei der erste Lesezugriff auf die erste Gruppe (312) von Attributen durch ein ID-Provider-Computersystem (500) erfolgt, welches die ausgelesenen ersten Attribute (220) an das Ausstellercomputersystem (200) weiterleitet.

4. Verfahren nach Anspruch 3, wobei die von dem ID-Provider-Computersystem (500) empfangenen ersten Attribute unter Verwendung eines zweiten Signaturschlüssels (518) des ID-Provider-Computersystems (500) signiert sind, wobei das Ausstellercomputersystem (200) die Signatur der empfangenen ersten Attribute unter Verwendung eines dem zweiten Signaturschlüssel (518) zugeordneten zweiten Signaturprüfschlüssel validiert, und/oder
wobei das ID-Provider-Computersystem (500) ein Zertifikat (512) umfasst zum Nachweisen einer Leseberechtigung gegenüber dem ID-Token (300) im Zuge des Authentifizierens des ID-Provider-Computersystems (500) als das den ersten Lesezugriff anfragende Auslesecomputersystem durch den ID-Token (300).

5. Verfahren nach einem der Ansprüche 1 bis 2, wobei der erste Lesezugriff auf die erste Gruppe (312) von Attributen durch das Ausstellercomputersystem (200) erfolgt.

6. Verfahren nach einem der vorangehenden Ansprüche, wobei der erste Lesezugriff auf die erste Gruppe (312) von Attributen über ein Endgerät (400) des Inhabers des ID-Tokens (300) erfolgt.

7. Verfahren nach einem der vorangehenden Ansprüche, wobei der zweite Lesezugriff auf die zweite Gruppe (314) von Attributen durch ein Inspektions-Computersystem (600) erfolgt, welches die ausgelesenen zweiten Attribute (222) an das Ausstellercomputersystem (200) weiterleitet.

8. Verfahren nach Anspruch 7, wobei die von dem Inspektions-Computersystem (600) empfangenen zweiten Attribute unter Verwendung eines dritten Signaturschlüssels (612) des Inspektions-Computersystems (600) signiert sind, wobei das Ausstellercomputersystem (200) die Signatur der empfangenen zweiten Attribute unter Verwendung eines dem dritten Signaturschlüssel (612) zugeordneten dritten Signaturprüfschlüssels validiert, und/oder
wobei das Inspektions-Computersystems (600) einen optoelektronischen Sensor (622) zum optoelektronischen Erfassen der Angaben des maschinenlesbaren Bereichs (320) des ID-Tokens (300) umfasst.

9. Verfahren nach einem der Ansprüche 1 bis 5, wobei der zweite Lesezugriff auf die zweite Gruppe (314) von Attributen durch das Ausstellercomputersystem (200) erfolgt.

10. Verfahren nach Anspruch 9, wobei das Ausstellercomputersystem (200) einen optoelektronischen Sensor (232) zum optoelektronischen Erfassen der Angaben des maschinenlesbaren Bereichs (320) des ID-Tokens (300) umfasst.

11. Verfahren nach einem der vorangehenden Ansprüche, wobei das Ausstellercomputersystem (200) eine Ausstellanfrage zum Ausstellen des ID-Nachweis (224) von einem Endgerät (400) des Inhabers des ID-Tokens (300) empfängt, wobei das Ausstellercomputersystem (200) den ausgestellten ID-Nachweis (224) in Antwort auf die Ausstellanfrage an das Endgerät (400) sendet.

12. Verfahren zum Bereitstellen eines digitalen ID-Nachweises (224) unter Verwendung eines ersten elektronischen ID-Tokens (300) und eines zweiten elektronischen ID-Tokens (301), wobei der erste ID-Token (300) einen ersten physischen Körper mit einem ersten Prozessor (308) und einem ersten Speicher (302) mit einem ersten geschützten Speicherbereich (304) umfasst, wobei der zweite ID-Token (301) einen zweiten physischen Körper mit einem zweiten Prozessor (309) und einem zweiten Speicher (303) mit einem zweiten geschützten Speicherbereich (305) umfasst,
wobei in dem ersten geschützten Speicherbereich (304) eine erste Gruppe (312) von Attributen mit ersten Attributen eines Inhabers des ersten ID-Tokens (300) gespeichert ist, wobei in dem zweiten geschützten Speicherbereich (305) ferner eine zweite Gruppe (314) von Attributen mit zweiten Attributen des Inhabers des zweiten ID-Tokens (301) gespeichert ist, wobei der erste und zweite ID-Token (300; 301) demselben Inhaber zugeordnet sind,
wobei die zweite Gruppe (314) von Attributen zweite identische Attribute umfasst, die jeweils zu einem ersten identischen Attribut der ersten Gruppe (312) von Attributen identisch sind, wobei die zweite Gruppe (314) von Attributen ferner ein oder mehrere zweite verschiedene Attribute umfasst, die verschieden sind von den ersten Attributen der ersten Gruppe (312) von Attributen, wobei die zweiten verschiedenen Attribute ein digitales Lichtbild des Inhabers umfassen,
wobei Voraussetzung für einen Lesezugriff auf die in dem ersten geschützten Speicherbereich (304) gespeicherte erste Gruppe (312) von Attributen ein erfolgreiches Authentifizieren des Inhabers durch den ersten ID-Token (300) und ein erfolgreiches Authentifizieren eines den entsprechenden Lesezugriff anfragenden Auslesecomputersystems durch den ersten ID-Token (300) ist,
wobei der zweite physischen Körper des zweiten elektronischen ID-Tokens (301) einen maschinenlesbaren Bereich (320) umfasst, welcher ein oder mehrere optoelektronisch erfassbare ID-Token-spezifische Angaben und ein oder mehrere optoelektronisch erfassbare inhaberspezifische Angaben umfasst,
wobei Voraussetzung für einen Lesezugriff auf die in dem zweiten geschützten Speicherbereich (304) des zweiten elektronischen ID-Tokens (301) gespeicherte zweite Gruppe (314) von Attributen eine Verwendung eines Zugriffschlüssels ist, welcher unter Verwendung ein oder mehrerer der ID-Token-spezifischen Angaben und ein oder mehrerer der inhaberspezifischen Angaben des maschinenlesbaren Bereichs (320) berechenbar ist,
wobei das Verfahren umfasst:
Empfangen mehrerer im Zuge eines ersten Auslesevorgangs durch einen ersten Lesezugriff auf die erste Gruppe (312) von Attributen aus dem ersten ID-Token (300) ausgelesener erster Attribute (220) durch ein Ausstellercomputersystem (200),
Empfangen mehrerer im Zuge eines zweiten Auslesevorgangs durch einen zweiten Lesezugriff auf die zweite Gruppe (314) von Attributen aus dem zweiten ID-Token (301) ausgelesener zweiter Attribute (222) durch das Ausstellercomputersystem (200), wobei die empfangenen zweiten Attribute zumindest das digitale Lichtbild des Inhabers und zweite identische Attribute umfassen, die jeweils zu einem der empfangenen ersten identischen Attribute identisch sind, wobei die empfangenen ersten Attribute ferner zumindest ein von den empfangenen zweiten Attributen verschiedenes erstes Attribut umfassen,
Prüfen des empfangenen zumindest einen zweiten identischen Attributs auf eine Übereinstimmung mit dem empfangenen zumindest einen ersten identischen Attribut durch das Ausstellercomputersystem (200),
auf eine Übereinstimmung hin, Ausstellen des digitalen ID-Nachweises (224) durch das Ausstellercomputersystem (200), welcher die empfangenen ersten und zweiten Attribute umfasst sowie kryptographische Sicherungsdaten des Ausstellercomputersystems (200), welche eine Validierung des digitalen ID-Nachweises (224) ermöglichen.

13. System (250) zum Bereitstellen eines digitalen ID-Nachweises (224) unter Verwendung eines elektronischen ID-Tokens (300), wobei das System (250) den ID-Token (300) und ein Ausstellercomputersystem (200) umfasst, wobei der ID-Token (300) einen Prozessor (308) und einen Speicher (302) mit einem geschützten Speicherbereich (304) umfasst,
wobei in dem geschützten Speicherbereich (304) eine erste Gruppe (312) von Attributen mit ersten Attributen eines Inhabers des ID-Tokens (300) gespeichert ist, wobei in dem geschützten Speicherbereich (304) ferner eine zweite Gruppe (314) von Attributen mit zweiten Attributen des Inhabers gespeichert ist,
wobei die zweite Gruppe (314) von Attributen zweite identische Attribute umfasst, die jeweils zu einem ersten identischen Attribut der ersten Gruppe (312) von Attributen identisch sind, wobei die zweite Gruppe (314) von Attributen ferner ein oder mehrere zweite verschiedene Attribute umfasst, die verschieden sind von den ersten Attributen der ersten Gruppe (312) von Attributen, wobei die zweiten verschiedenen Attribute ein digitales Lichtbild des Inhabers umfassen,
wobei der elektronische ID-Token (300) einen physischen Körper mit einem maschinenlesbaren Bereich (320) umfasst, welcher ein oder mehrere optoelektronisch erfassbare ID-Token-spezifische Angaben und ein oder mehrere optoelektronisch erfassbare inhaberspezifische Angaben umfasst,
wobei Voraussetzung für einen Lesezugriff auf die in dem geschützten Speicherbereich (304) gespeicherte erste Gruppe (312) von Attributen ein erfolgreiches Authentifizieren des Inhabers durch den ID-Token (300) und ein erfolgreiches Authentifizieren eines den entsprechenden Lesezugriff anfragenden Auslesecomputersystems durch den ID-Token (300) ist,
wobei Voraussetzung für einen Lesezugriff auf die in dem geschützten Speicherbereich (304) gespeicherte zweite Gruppe (314) von Attributen eine Verwendung eines Zugriffschlüssels ist, welcher unter Verwendung ein oder mehrerer der ID-Token-spezifischen Angaben und ein oder mehrerer der inhaberspezifischen Angaben des maschinenlesbaren Bereichs (320) berechenbar ist,
wobei das Ausstellercomputersystem (200) einen Prozessor (208) und einen Speicher (202) mit maschinenlesbaren Programminstruktionen (206) umfasst,
wobei ein Ausführen der Programminstruktionen (206) durch den Prozessor (208) das Ausstellercomputersystem (200) veranlasst zum:
Empfangen mehrerer im Zuge eines ersten Auslesevorgangs durch einen ersten Lesezugriff auf die erste Gruppe (312) von Attributen aus dem ID-Token (300) ausgelesener erster Attribute (220),
Empfangen mehrerer im Zuge eines zweiten Auslesevorgangs durch einen zweiten Lesezugriff auf die zweite Gruppe (314) von Attributen aus dem ID-Token (300) ausgelesener zweiter Attribute (222), wobei die empfangenen zweiten Attribute zumindest das digitale Lichtbild des Inhabers und zweite identische Attribute umfassen, die jeweils zu einem der empfangenen ersten identischen Attribute identisch sind, wobei die empfangenen ersten Attribute ferner zumindest ein von den empfangenen zweiten Attributen verschiedenes erstes Attribut umfassen,
Prüfen des empfangenen zumindest einen zweiten identischen Attributs auf eine Übereinstimmung mit dem empfangenen zumindest einen ersten identischen Attribut,
auf eine Übereinstimmung hin, Ausstellen des digitalen ID-Nachweises (224), welcher die empfangenen ersten und zweiten Attribute umfasst sowie kryptographische Sicherungsdaten des Ausstellercomputersystems (200), welche eine Validierung des digitalen ID-Nachweises (224) ermöglichen.

14. System (250) zum Bereitstellen eines digitalen ID-Nachweises (224) unter Verwendung eines ersten elektronischen ID-Tokens (300) und eines zweiten elektronischen ID-Tokens (301), wobei das System (250) die beiden ID-Token (300; 301) und ein Ausstellercomputersystem (200) umfasst, wobei der erste ID-Token (300) einen ersten physischen Körper mit einem ersten Prozessor (308) und einem ersten Speicher (302) mit einem ersten geschützten Speicherbereich (304) umfasst, wobei der zweite ID-Token (301) einen zweiten physischen Körper mit einem zweiten Prozessor (309) und einem zweiten Speicher (303) mit einem zweiten geschützten Speicherbereich (305) umfasst,
wobei in dem ersten geschützten Speicherbereich (304) eine erste Gruppe (312) von Attributen mit ersten Attributen eines Inhabers des ersten ID-Tokens (300) gespeichert ist, wobei in dem zweiten geschützten Speicherbereich (305) ferner eine zweite Gruppe (314) von Attributen mit zweiten Attributen des Inhabers des zweiten ID-Tokens (301) gespeichert ist, wobei der erste und zweite ID-Token (300; 301) demselben Inhaber zugeordnet sind,
wobei die zweite Gruppe (314) von Attributen zweite identische Attribute umfasst, die jeweils zu einem ersten identischen Attribut der ersten Gruppe (312) von Attributen identisch sind, wobei die zweite Gruppe (314) von Attributen ferner ein oder mehrere zweite verschiedene Attribute umfasst, die verschieden sind von den ersten Attributen der ersten Gruppe (312) von Attributen, wobei die zweiten verschiedenen Attribute ein digitales Lichtbild des Inhabers umfassen,
wobei Voraussetzung für einen Lesezugriff auf die in dem ersten geschützten Speicherbereich (304) gespeicherte erste Gruppe (312) von Attributen ein erfolgreiches Authentifizieren des Inhabers durch den ersten ID-Token (300) und ein erfolgreiches Authentifizieren eines den entsprechenden Lesezugriff anfragenden Auslesecomputersystems durch den ersten ID-Token (300) ist,
wobei der zweite physischen Körper des zweiten elektronischen ID-Tokens (301) einen maschinenlesbaren Bereich (320) umfasst, welcher ein oder mehrere optoelektronisch erfassbare ID-Token-spezifische Angaben und ein oder mehrere optoelektronisch erfassbare inhaberspezifische Angaben umfasst,
wobei Voraussetzung für einen Lesezugriff auf die in dem zweiten geschützten Speicherbereich (304) des zweiten elektronischen ID-Tokens (301) gespeicherte zweite Gruppe (314) von Attributen eine Verwendung eines Zugriffschlüssels ist, welcher unter Verwendung ein oder mehrerer der ID-Token-spezifischen Angaben und ein oder mehrerer der inhaberspezifischen Angaben des maschinenlesbaren Bereichs (320) berechenbar ist,
wobei das Ausstellercomputersystem (200) einen Prozessor (208) und einen Speicher (202) mit maschinenlesbaren Programminstruktionen (206) umfasst,
wobei ein Ausführen der Programminstruktionen (206) durch den Prozessor (208) das Ausstellercomputersystem (200) veranlasst zum:
Empfangen mehrerer im Zuge eines ersten Auslesevorgangs durch einen ersten Lesezugriff auf die erste Gruppe (312) von Attributen aus dem ersten ID-Token (300) ausgelesener erster Attribute (220) durch ein Ausstellercomputersystem (200),
Empfangen mehrerer im Zuge eines zweiten Auslesevorgangs durch einen zweiten Lesezugriff auf die zweite Gruppe (314) von Attributen aus dem zweiten ID-Token (301) ausgelesener zweiter Attribute (222) durch das Ausstellercomputersystem (200), wobei die empfangenen zweiten Attribute zumindest das digitale Lichtbild des Inhabers und zweite identische Attribute umfassen, die jeweils zu einem der empfangenen ersten identischen Attribute identisch sind, wobei die empfangenen ersten Attribute ferner zumindest ein von den empfangenen zweiten Attributen verschiedenes erstes Attribut umfassen,
Prüfen des empfangenen zumindest einen zweiten identischen Attributs auf eine Übereinstimmung mit dem empfangenen zumindest einen ersten identischen Attribut durch das Ausstellercomputersystem (200),
auf eine Übereinstimmung hin, Ausstellen des digitalen ID-Nachweises (224) durch das Ausstellercomputersystem (200), welcher die empfangenen ersten und zweiten Attribute umfasst sowie kryptographische Sicherungsdaten des Ausstellercomputersystems (200), welche eine Validierung des digitalen ID-Nachweises (224) ermöglichen.

15. System (250) nach einem der Ansprüche 13 bis 14, wobei das System (250) ferner ein ID-Provider-Computersystem (500) umfasst, wobei das ID-Provider-Computersystem (500) dazu konfiguriert ist, den ersten Lesezugriff auf die erste Gruppe (312) von Attributen auszuführen und die ausgelesenen ersten Attribute (220) an das Ausstellercomputersystem (200) weiterzuleiten, und/oder
wobei das System (250) ferner ein Inspektions-Computersystem (600) umfasst, wobei das Inspektions-Computersystem (600) dazu konfiguriert ist, den zweiten Lesezugriff auf die zweite Gruppe (314) von Attributen auszuführen und die ausgelesenen zweiten Attribute (222) an das Ausstellercomputersystem (200) weiterzuleiten, und/oder
wobei das System (250) ferner ein Endgerät (400) des Inhabers des ID-Tokens (300) umfasst, wobei das Endgerät (400) dazu konfiguriert ist, eine Ausstellanfrage zum Ausstellen des ID-Nachweis (224) an das Ausstellercomputersystem (200) zu senden, wobei das Ausführen der Programminstruktionen (206) durch den Prozessor (208) das Ausstellercomputersystem (200) ferner veranlasst den ausgestellten ID-Nachweis (224) in Antwort auf die Ausstellanfrage an das Endgerät (400) zu senden.

## Claims

1. A method for providing a digital ID credential (224) using an electronic ID token (300), wherein the ID token (300) comprises a processor (308) and a memory (302) comprising a protected memory area (304),
wherein a first group (312) of attributes comprising first attributes of a holder of the ID token (300) is stored in the protected memory area (304), wherein a second group (314) of attributes comprising second attributes of the holder is further stored in the protected memory area (304),
wherein the second group (314) of attributes comprises second identical attributes, each of which is identical to a first identical attribute of the first group (312) of attributes, wherein the second group (314) of attributes further comprises one or more second different attributes that are different from the first attributes of the first group (312) of attributes, wherein the second different attributes comprise a digital photograph of the holder,
wherein the electronic ID token (300) comprises a physical body with a machine-readable zone (320) that comprises one or more optoelectronically detectable ID token-specific data items and one or more optoelectronically detectable holder-specific data items,
wherein a prerequisite for a read access to the first group (312) of attributes stored in the protected memory area (304) is a successful authentication of the holder by the ID token (300) and a successful authentication of a reading computer system requesting the corresponding read access by the ID token (300),
wherein a prerequisite for a read access to the second group (314) of attributes stored in the protected memory area (304) is a use of an access key, which can be calculated using one or more of the ID token-specific data items and one or more of the holder-specific data items of the machine-readable zone (320),
wherein the method comprises:
receiving, by an issuer computer system (200), a plurality of first attributes (220) read from the ID token (300) during a first read operation via a first read access to the first group (312) of attributes,
receiving, by the issuer computer system (200), a plurality of second attributes (222) read from the ID token (300) during a second read operation via a second read access to the second group (314) of attributes, wherein the received second attributes comprise at least the digital photograph of the holder and second identical attributes, each of which is identical to one of the received first identical attributes, wherein the received first attributes further comprise at least one first attribute different from the received second attributes,
checking, by the issuer computer system (200), the received at least one second identical attribute for an identical match with the received at least one first identical attribute,
if an identical match is found, issuing, by the issuer computer system (200), the digital ID credential (224), which comprises the received first and second attributes as well as cryptographic security data from the issuer computer system (200) that enable a validation of the digital ID credential (224).

2. The method according to claim 1, wherein the received second identical attributes uniquely identify the holder and/or
wherein the cryptographic security data comprise a signature of the digital ID credential (224) generated using a first signature key (212) of the issuer computer system (200), or wherein the cryptographic security data comprise data of an authenticating encryption of the digital ID credential (224).

3. The method according to any one of the preceding claims, wherein the first read access to the first group (312) of attributes is performed by an ID provider computer system (500), which forwards the read first attributes (220) to the issuer computer system (200).

4. The method according to claim 3, wherein the first attributes received from the ID provider computer system (500) are signed using a second signature key (518) of the ID provider computer system (500), wherein the issuer computer system (200) validates the signature of the received first attributes using a second signature verification key assigned to the second signature key (518), and/or
wherein the ID provider computer system (500) comprises a certificate (512) for proving a read authorization with respect to the ID token (300) during the authentication of the ID provider computer system (500) as the reading computer system requesting the first read access by the ID token (300).

5. The method according to any one of claims 1 to 2, wherein the first read access to the first group (312) of attributes is performed by the issuer computer system (200).

6. The method according to any one of the preceding claims, wherein the first read access to the first group (312) of attributes is performed via a terminal device (400) of the holder of the ID token (300).

7. The method according to any one of the preceding claims, wherein the second read access to the second group (314) of attributes is performed by an inspection computer system (600), which forwards the read second attributes (222) to the issuer computer system (200).

8. The method of claim 7, wherein the second attributes received by the inspection computer system (600) are signed using a third signature key (612) of the inspection computer system (600), wherein the issuer computer system (200) validates the signature of the received second attributes using a third signature verification key assigned to the third signature key (612), and/or
wherein the inspection computer system (600) comprises an optoelectronic sensor (622) for an optoelectronic detection of the data items in the machine-readable zone (320) of the ID token (300).

9. The method according to any one of claims 1 to 5, wherein the second read access to the second group (314) of attributes is performed by the issuer computer system (200).

10. The method according to claim 9, wherein the issuer computer system (200) comprises an optoelectronic sensor (232) for an optoelectronic detection of the data items in the machine-readable zone (320) of the ID token (300).

11. The method according to any one of the preceding claims, wherein the issuer computer system (200) receives an issuance request to issue the ID credential (224) from a terminal device (400) of the holder of the ID token (300), wherein the issuer computer system (200) sends the issued ID credential (224) to the terminal device (400) in response to the issuance request.

12. A method for providing a digital ID credential (224) using a first electronic ID token (300) and a second electronic ID token (301), wherein the first ID token (300) comprises a first physical body with a first processor (308) and a first memory (302) comprising a first protected memory area (304), wherein the second ID token (301) comprises a second physical body comprising a second processor (309) and a second memory (303) comprising a second protected memory area (305),
wherein a first group (312) of attributes comprising first attributes of a holder of the first ID token (300) is stored in the first protected memory area (304), wherein a second group (314) of attributes comprising second attributes of the holder of the second ID token (301) is further stored in the second protected memory area (305), wherein the first and second ID tokens (300; 301) are assigned to the same holder,
wherein the second group (314) of attributes comprises second identical attributes, each of which is identical to a first identical attribute of the first group (312) of attributes, wherein the second group (314) of attributes further comprises one or more second different attributes that are different from the first attributes of the first group (312) of attributes, wherein the second different attributes comprise a digital photograph of the holder,
wherein a prerequisite for a read access to the first group (312) of attributes stored in the first protected memory area (304) is a successful authentication of the holder by the first ID token (300) and a successful authentication of a reading computer system requesting the corresponding read access by the first ID token (300),
wherein the second physical body of the second electronic ID token (301) comprises a machine-readable zone (320) that comprises one or more optoelectronically detectable ID token-specific data items and one or more optoelectronically detectable holder-specific data items,
wherein a prerequisite for a read access to the second protected memory area (304) of the second electronic ID token (301) is a use of an access key, which can be calculated using one or more of the ID token-specific data items and one or more of the holder-specific data items of the machine-readable zone (320),
wherein the method comprises:
receiving, by an issuer computer system (200), a plurality of first attributes (220) read from the first ID token (300) during a first read operation via a first read access to the first group (312) of attributes,
receiving, by the issuer computer system (200), a plurality of second attributes (222) read from the second ID token (301) during a second read operation via a second read access to the second group (314) of attributes, wherein the received second attributes comprise at least the digital photograph of the holder and second identical attributes, each of which is identical to one of the received first identical attributes, wherein the received first attributes further comprise at least one first attribute different from the received second attributes,
checking, by the issuer computer system (200), the received at least one second identical attribute for an identical match with the received at least one first identical attribute,
if an identical match is found, issuing, by the issuer computer system (200), the digital ID credential (224), which comprises the received first and second attributes as well as cryptographic security data of the issuer computer system (200) that enable a validation of the digital ID credential (224).

13. A system (250) for providing a digital ID credential (224) using an electronic ID token (300), wherein the system (250) comprises the ID token (300) and an issuer computer system (200), wherein the ID token (300) comprises a processor (308) and a memory (302) comprising a protected memory area (304),
wherein a first group (312) of attributes comprising first attributes of a holder of the ID token (300) is stored in the protected memory area (304), wherein a second group (314) of attributes comprising second attributes of the holder is further stored in the protected memory area (304),
wherein the second group (314) of attributes comprises second identical attributes, each of which is identical to a first identical attribute of the first group (312) of attributes, and wherein the second group (314) of attributes further comprises one or more second different attributes that are different from the first attributes of the first group (312) of attributes, wherein the second different attributes comprise a digital photograph of the holder,
wherein the electronic ID token (300) comprises a physical body with a machine-readable zone (320) that comprises one or more optoelectronically detectable ID token-specific data items and one or more optoelectronically detectable holder-specific data items,
wherein a prerequisite for a read access to the first group (312) of attributes stored in the protected memory area (304) is a successful authentication of the holder by the ID token (300) and a successful authentication of a reading computer system requesting the corresponding read access by the ID token (300),
wherein a prerequisite for a read access to the second group (314) of attributes stored in the protected memory area (304) is a use of an access key, which can be calculated using one or more of the ID token-specific data items and one or more of the holder-specific data items of the machine-readable zone (320),
wherein the issuer computer system (200) comprises a processor (208) and a memory (202) containing machine-readable program instructions (206),
wherein an execution of the program instructions (206) by the processor (208) causes the issuer computer system (200) to:
receive a plurality of first attributes (220) read from the ID token (300) during a first read operation via a first read access to the first group (312) of attributes,
receive a plurality of second attributes (222) read from the ID token (300) during a second read operation via a second read access to the second group (314) of attributes, wherein the received second attributes comprise at least the digital photograph of the holder and second identical attributes, each of which is identical to one of the received first identical attributes, wherein the received first attributes further comprise at least one first attribute different from the received second attributes,
check the received at least one second identical attribute for an identical match with the received at least one first identical attribute,
if an identical match is found, issue the digital ID credential (224), which comprises the received first and second attributes as well as cryptographic security data from the issuer computer system (200) that enable a validation of the digital ID credential (224).

14. A system (250) for providing a digital ID credential (224) using a first electronic ID token (300) and a second electronic ID token (301), wherein the system (250) comprises the two ID tokens (300; 301) and an issuer computer system (200), wherein the first ID token (300) comprises a first physical body comprising a first processor (308) and a first memory (302) with a first protected memory area (304), wherein the second ID token (301) comprises a second physical body with a second processor (309) and a second memory (303) comprising a second protected memory area (305),
wherein a first group (312) of attributes comprising first attributes of a holder of the first ID token (300) is stored in the first protected memory area (304), wherein a second group (314) of attributes comprising second attributes of the holder of the second ID token (301) is further stored in the second protected memory area (305), wherein the first and second ID tokens (300; 301) are assigned to the same holder,
wherein the second group (314) of attributes comprises second identical attributes, each of which is identical to a first identical attribute of the first group (312) of attributes, wherein the second group (314) of attributes further comprises one or more second different attributes that are different from the first attributes of the first group (312) of attributes, wherein the second different attributes comprise a digital photograph of the holder,
wherein a prerequisite for a read access to the first group (312) of attributes stored in the first protected memory area (304) is a successful authentication of the holder by the first ID token (300) and a successful authentication of a reading computer system requesting the corresponding read access by the first ID token (300),
wherein the second physical body of the second electronic ID token (301) comprises a machine-readable zone (320) that comprises one or more optoelectronically detectable ID token-specific data items and one or more optoelectronically detectable holder-specific data items,
wherein a prerequisite for a read access to the second group (314) of attributes stored in the second protected memory area (304) of the second electronic ID token (301) is a use of an access key, which can be calculated using one or more of the ID token-specific data items and one or more of the holder-specific data items of the machine-readable zone (320),
wherein the issuer computer system (200) comprises a processor (208) and a memory (202) containing machine-readable program instructions (206),
wherein an execution of the program instructions (206) by the processor (208) causes the issuer computer system (200) to:
receive, by an issuer computer system (200), a plurality of first attributes (220) read from the first ID token (300) during a first read operation via a first read access to the first group (312) of attributes,
receive, by the issuer computer system (200), a plurality of second attributes (222) read from the second ID token (301) during a second read operation via a second read access to the second group (314) of attributes, wherein the received second attributes comprise at least the digital photograph of the holder and second identical attributes, each of which is identical to one of the received first identical attributes, wherein the received first attributes further comprise at least one first attribute different from the received second attributes,
check, by the issuer computer system (200), the received at least one second identical attribute for an identical match with the received at least one first identical attribute,
if an identical match is found, issue, by the issuer computer system (200), the digital ID credential (224), which comprises the received first and second attributes as well as cryptographic security data of the issuer computer system (200) that enable a validation of the digital ID credential (224).

15. A system (250) according to any one of claims 13 to 14, wherein the system (250) further comprises an ID provider computer system (500), wherein the ID provider computer system (500) is configured to perform the first read access to the first group (312) of attributes and to forward the read first attributes (220) to the issuer computer system (200), and/or
wherein the system (250) further comprises an inspection computer system (600), wherein the inspection computer system (600) is configured to perform the second read access to the second group (314) of attributes and to forward the read second attributes (222) to the issuer computer system (200), and/or
wherein the system (250) further comprises a terminal device (400) of the holder of the ID token (300), wherein the terminal device (400) is configured to send an issuance request to issue the ID credential (224) to the issuer computer system (200), wherein the execution of the program instructions (206) by the processor (208) further causes the issuer computer system (200) to send the issued ID credential (224) to the terminal device (400) in response to the issuance request.

## Revendications

1. Procédé de fourniture d'une preuve d'identification numérique (224) utilisant un jeton d'identification électronique (300), le jeton d'identification (300) comprenant un processeur (308) et une mémoire (302) avec une zone de mémoire protégée (304),
un premier groupe (312) d'attributs avec des premiers attributs d'un propriétaire du jeton d'identification (300) étant stocké dans la zone de mémoire protégée (304), un deuxième groupe (314) d'attributs avec des deuxièmes attributs du propriétaire étant en outre stocké dans la zone de mémoire protégée (304),
le deuxième groupe (314) d'attributs comprenant des deuxièmes attributs identiques qui sont respectivement identiques à un premier attribut identique du premier groupe (312) d'attributs, le deuxième groupe (314) d'attributs comprenant en outre un ou plusieurs deuxièmes attributs différents qui sont différents des premiers attributs du premier groupe (312) d'attributs, les deuxièmes attributs différents comprenant une photographie numérique du propriétaire,
le jeton d'identification électronique (300) comprenant un corps physique avec une zone lisible par machine (320) qui comprend une ou plusieurs indications spécifiques au jeton d'identification détectables optoélectroniquement et une ou plusieurs indications spécifiques au propriétaire détectables optoélectroniquement,
une condition pour un accès en lecture au premier groupe (312) d'attributs stocké dans la zone de mémoire protégée (304) étant une authentification réussie du propriétaire par le jeton d'identification (300) et une authentification réussie d'un système informatique de lecture demandant l'accès en lecture correspondant par le jeton d'identification (300),
une condition pour un accès en lecture au deuxième groupe (314) d'attributs stocké dans la zone de mémoire protégée (304) étant une utilisation d'une clé d'accès qui peut être calculée en utilisant une ou plusieurs des indications de la zone lisible par machine (320) spécifiques au jeton d'identification et une ou plusieurs des indications de la zone lisible par machine (320) spécifiques au propriétaire,
le procédé comprenant :
la réception d'une pluralité de premiers attributs (220) lus au cours d'une première opération de lecture par un premier accès en lecture au premier groupe (312) d'attributs à partir du jeton d'identification (300) par un système informatique émetteur (200),
la réception d'une pluralité de deuxièmes attributs (222) lus au cours d'une deuxième opération de lecture par un deuxième accès en lecture au deuxième groupe (314) d'attributs à partir du jeton d'identification (300) par le système informatique émetteur (200), les deuxièmes attributs reçus comprenant au moins la photographie numérique du propriétaire et des deuxièmes attributs identiques qui sont respectivement identiques à l'un des premiers attributs identiques reçus, les premiers attributs reçus comprenant en outre au moins un premier attribut différent des deuxièmes attributs reçus,
la vérification de l'au moins un deuxième attribut identique reçu pour une concordance avec l'au moins un premier attribut identique reçu par le système informatique émetteur (200),
en cas de concordance, l'émission de la preuve d'identification numérique (224) par le système informatique émetteur (200) qui comprend les premiers et deuxièmes attributs reçus ainsi que des données de sécurité cryptographiques du système informatique émetteur (200) qui permettent une validation de la preuve d'identification numérique (224).

2. Procédé selon la revendication 1, les deuxièmes attributs identiques reçus identifiant de manière univoque le propriétaire et/ou
les données de sécurité cryptographiques comprenant une signature de la preuve d'identification numérique (224) établie en utilisant une première clé de signature (212) du système informatique émetteur (200) ou les données de sécurité cryptographiques comprenant des données d'un chiffrement d'authentification de la preuve d'identification numérique (224).

3. Procédé selon l'une des revendications précédentes, le premier accès en lecture au premier groupe (312) d'attributs étant effectué par un système informatique fournisseur d'identification (500) qui transmet les premiers attributs (220) lus au système informatique émetteur (200).

4. Procédé selon la revendication 3, les premiers attributs reçus par le système informatique fournisseur d'identification (500) étant signés en utilisant une deuxième clé de signature (518) du système informatique fournisseur d'identification (500), le système informatique émetteur (200) validant la signature des premiers attributs reçus en utilisant une deuxième clé de vérification de signature associée à la deuxième clé de signature (518), et/ou
le système informatique fournisseur d'identification (500) comprenant un certificat (512) pour la preuve d'une autorisation de lecture vis-à-vis du jeton d'identification (300) au cours de l'authentification du système informatique fournisseur d'identification (500) en tant que système informatique de lecture demandant le premier accès en lecture par le jeton d'identification (300).

5. Procédé selon l'une des revendications 1 à 2, le premier accès en lecture au premier groupe (312) d'attributs étant effectué par le système informatique émetteur (200).

6. Procédé selon l'une des revendications précédentes, le premier accès en lecture au premier groupe (312) d'attributs étant effectué par le biais d'un terminal (400) du propriétaire du jeton d'identification (300).

7. Procédé selon l'une des revendications précédentes, le deuxième accès en lecture au deuxième groupe (314) d'attributs étant effectué par un système informatique d'inspection (600) qui transmet les deuxièmes attributs (222) lus au système informatique émetteur (200).

8. Procédé selon la revendication 7, les deuxièmes attributs reçus par le système informatique d'inspection (600) étant signés en utilisant une troisième clé de signature (612) du système informatique d'inspection (600), le système informatique émetteur (200) validant la signature des deuxièmes attributs reçus en utilisant une troisième clé de vérification de signature associée à la troisième clé de signature (612), et/ou
le système informatique d'inspection (600) comprenant un capteur optoélectronique (622) pour la détection optoélectronique des indications de la zone lisible par machine (320) du jeton d'identification (300).

9. Procédé selon l'une des revendications 1 à 5, le deuxième accès en lecture au deuxième groupe (314) d'attributs étant effectué par le système informatique émetteur (200).

10. Procédé selon la revendication 9, le système informatique émetteur (200) comprenant un capteur optoélectronique (232) pour la détection optoélectronique des indications de la zone lisible par machine (320) du jeton d'identification (300).

11. Procédé selon l'une des revendications précédentes, le système informatique émetteur (200) recevant une demande d'émission pour l'émission de la preuve d'identification numérique (224) d'un terminal (400) du propriétaire du jeton d'identification (300), le système informatique émetteur (200) envoyant la preuve d'identification numérique (224) émise au terminal (400) en réponse à la demande d'émission.

12. Procédé de fourniture d'une preuve d'identification numérique (224) utilisant un premier jeton d'identification électronique (300) et un deuxième jeton d'identification électronique (301), le premier jeton d'identification (300) comprenant un premier corps physique avec un premier processeur (308) et une première mémoire (302) avec une première zone de mémoire protégée (304), le deuxième jeton d'identification (301) comprenant un deuxième corps physique avec un deuxième processeur (309) et une deuxième mémoire (303) avec une deuxième zone de mémoire protégée (305),
un premier groupe (312) d'attributs avec des premiers attributs d'un propriétaire du premier jeton d'identification (300) étant stocké dans la première zone de mémoire protégée (304), un deuxième groupe (314) d'attributs avec des deuxièmes attributs du propriétaire du deuxième jeton d'identification (301) étant en outre stocké dans la deuxième zone de mémoire protégée (305), les premier et deuxième jetons d'identification (300 ; 301) étant associés au même propriétaire,
le deuxième groupe (314) d'attributs comprenant des deuxièmes attributs identiques qui sont respectivement identiques à un premier attribut identique du premier groupe (312) d'attributs, le deuxième groupe (314) d'attributs comprenant en outre un ou plusieurs deuxièmes attributs différents qui sont différents des premiers attributs du premier groupe (312) d'attributs, les deuxièmes attributs différents comprenant une photographie numérique du propriétaire,
une condition pour un accès en lecture au premier groupe (312) d'attributs stocké dans la première zone de mémoire protégée (304) étant une authentification réussie du propriétaire par le premier jeton d'identification (300) et une authentification réussie d'un système informatique de lecture demandant l'accès en lecture correspondant par le premier jeton d'identification (300),
le deuxième corps physique du deuxième jeton d'identification électronique (301) comprenant une zone lisible par machine (320) qui comprend une ou plusieurs indications spécifiques au jeton d'identification détectables optoélectroniquement et une ou plusieurs indications spécifiques au propriétaire détectables optoélectroniquement,
une condition pour un accès en lecture à la deuxième zone de mémoire protégée (304) du deuxième jeton d'identification électronique (301) étant une utilisation d'une clé d'accès qui peut être calculée en utilisant une ou plusieurs des indications de la zone lisible par machine (320) spécifiques au jeton d'identification et une ou plusieurs des indications de la zone lisible par machine (320) spécifiques au propriétaire,
le procédé comprenant :
la réception d'une pluralité de premiers attributs (220) lus au cours d'une première opération de lecture par un premier accès en lecture au premier groupe (312) d'attributs à partir du premier jeton d'identification (300) par un système informatique émetteur (200),
la réception d'une pluralité de deuxièmes attributs (222) lus au cours d'une deuxième opération de lecture par un deuxième accès en lecture au deuxième groupe (314) d'attributs à partir du deuxième jeton d'identification (301) par le système informatique émetteur (200), les deuxièmes attributs reçus comprenant au moins la photographie numérique du propriétaire et des deuxièmes attributs identiques qui sont respectivement identiques à l'un des premiers attributs identiques reçus, les premiers attributs reçus comprenant en outre au moins un premier attribut différent des deuxièmes attributs reçus,
la vérification de l'au moins un deuxième attribut identique reçu pour une concordance avec l'au moins un premier attribut identique reçu par le système informatique émetteur (200),
en cas de concordance, l'émission de la preuve d'identification numérique (224) par le système informatique émetteur (200) qui comprend les premiers et deuxièmes attributs reçus ainsi que des données de sécurité cryptographiques du système informatique émetteur (200) qui permettent une validation de la preuve d'identification numérique (224).

13. Système (250) de fourniture d'une preuve d'identification numérique (224) utilisant un jeton d'identification électronique (300), le système (250) comprenant le jeton d'identification (300) et un système informatique émetteur (200), le jeton d'identification (300) comprenant un processeur (308) et une mémoire (302) avec une zone de mémoire protégée (304),
un premier groupe (312) d'attributs avec des premiers attributs d'un propriétaire du jeton d'identification (300) étant stocké dans la zone de mémoire protégée (304), un deuxième groupe (314) d'attributs avec des deuxièmes attributs du propriétaire étant en outre stocké dans la zone de mémoire protégée (304),
le deuxième groupe (314) d'attributs comprenant des deuxièmes attributs identiques qui sont respectivement identiques à un premier attribut identique du premier groupe (312) d'attributs, le deuxième groupe (314) d'attributs comprenant en outre un ou plusieurs deuxièmes attributs différents qui sont différents des premiers attributs du premier groupe (312) d'attributs, les deuxièmes attributs différents comprenant une photographie numérique du propriétaire,
le jeton d'identification électronique (300) comprenant un corps physique avec une zone lisible par machine (320) qui comprend une ou plusieurs indications spécifiques au jeton d'identification détectables optoélectroniquement et une ou plusieurs indications spécifiques au propriétaire détectables optoélectroniquement,
une condition pour un accès en lecture au premier groupe (312) d'attributs stocké dans la zone de mémoire protégée (304) étant une authentification réussie du propriétaire par le jeton d'identification (300) et une authentification réussie d'un système informatique de lecture demandant l'accès en lecture correspondant par le jeton d'identification (300),
une condition pour un accès en lecture au deuxième groupe (314) d'attributs stocké dans la zone de mémoire protégée (304) étant une utilisation d'une clé d'accès qui peut être calculée en utilisant une ou plusieurs des indications de la zone lisible par machine (320) spécifiques au jeton d'identification et une ou plusieurs des indications de la zone lisible par machine (320) spécifiques au propriétaire,
le système informatique émetteur (200) comprenant un processeur (208) et une mémoire (202) avec des instructions de programme lisibles par machine (206),
une exécution des instructions de programme (206) par le processeur (208) amenant le système informatique émetteur (200) à :
recevoir une pluralité de premiers attributs (220) lus au cours d'une première opération de lecture par un premier accès en lecture au premier groupe (312) d'attributs à partir du jeton d'identification (300),
recevoir une pluralité de deuxièmes attributs (222) lus au cours d'une deuxième opération de lecture par un deuxième accès en lecture au deuxième groupe (314) d'attributs à partir du jeton d'identification (300), les deuxièmes attributs reçus comprenant au moins la photographie numérique du propriétaire et des deuxièmes attributs identiques qui sont respectivement identiques à l'un des premiers attributs identiques reçus, les premiers attributs reçus comprenant en outre au moins un premier attribut différent des deuxièmes attributs reçus,
vérifier l'au moins un deuxième attribut identique reçu pour une concordance avec l'au moins un premier attribut identique reçu,
en cas de concordance, émettre la preuve d'identification numérique (224) qui comprend les premiers et deuxièmes attributs reçus ainsi que des données de sécurité cryptographiques du système informatique émetteur (200) qui permettent une validation de la preuve d'identification numérique (224).

14. Système (250) de fourniture d'une preuve d'identification numérique (224) utilisant un premier jeton d'identification électronique (300) et un deuxième jeton d'identification électronique (301), le système (250) comprenant les deux jetons d'identification (300 ; 301) et un système informatique émetteur (200), le premier jeton d'identification (300) comprenant un premier corps physique avec un premier processeur (308) et une première mémoire (302) avec une première zone de mémoire protégée (304), le deuxième jeton d'identification (301) comprenant un deuxième corps physique avec un deuxième processeur (309) et une deuxième mémoire (303) avec une deuxième zone de mémoire protégée (305),
un premier groupe (312) d'attributs avec des premiers attributs d'un propriétaire du premier jeton d'identification (300) étant stocké dans la première zone de mémoire protégée (304), un deuxième groupe (314) d'attributs avec des deuxièmes attributs du propriétaire du deuxième jeton d'identification (301) étant en outre stocké dans la deuxième zone de mémoire protégée (305), les premier et deuxième jetons d'identification (300 ; 301) étant associés au même propriétaire,
le deuxième groupe (314) d'attributs comprenant des deuxièmes attributs identiques qui sont respectivement identiques à un premier attribut identique du premier groupe (312) d'attributs, le deuxième groupe (314) d'attributs comprenant en outre un ou plusieurs deuxièmes attributs différents qui sont différents des premiers attributs du premier groupe (312) d'attributs, les deuxièmes attributs différents comprenant une photographie numérique du propriétaire,
une condition pour un accès en lecture au premier groupe (312) d'attributs stocké dans la première zone de mémoire protégée (304) étant une authentification réussie du propriétaire par le premier jeton d'identification (300) et une authentification réussie d'un système informatique de lecture demandant l'accès en lecture correspondant par le premier jeton d'identification (300),
le deuxième corps physique du deuxième jeton d'identification électronique (301) comprenant une zone lisible par machine (320) qui comprend une ou plusieurs indications spécifiques au jeton d'identification détectables optoélectroniquement et une ou plusieurs indications spécifiques au propriétaire détectables optoélectroniquement,
une condition pour un accès en lecture à la deuxième zone de mémoire protégée (304) du deuxième jeton d'identification électronique (301) étant une utilisation d'une clé d'accès qui peut être calculée en utilisant une ou plusieurs des indications de la zone lisible par machine (320) spécifiques au jeton d'identification et une ou plusieurs des indications de la zone lisible par machine (320) spécifiques au propriétaire,
le système informatique émetteur (200) comprenant un processeur (208) et une mémoire (202) avec des instructions de programme lisibles par machine (206),
une exécution des instructions de programme (206) par le processeur (208) amenant le système informatique émetteur (200) à :
recevoir une pluralité de premiers attributs (220) lus au cours d'une première opération de lecture par un premier accès en lecture au premier groupe (312) d'attributs à partir du premier jeton d'identification (300) par un système informatique émetteur (200),
recevoir une pluralité de deuxièmes attributs (222) lus au cours d'une deuxième opération de lecture par un deuxième accès en lecture au deuxième groupe (314) d'attributs à partir du deuxième jeton d'identification (301) par le système informatique émetteur (200), les deuxièmes attributs reçus comprenant au moins la photographie numérique du propriétaire et des deuxièmes attributs identiques qui sont respectivement identiques à l'un des premiers attributs identiques reçus, les premiers attributs reçus comprenant en outre au moins un premier attribut différent des deuxièmes attributs reçus,
vérifier l'au moins un deuxième attribut identique reçu pour une concordance avec l'au moins un premier attribut identique reçu par le système informatique émetteur (200),
en cas de concordance, émettre la preuve d'identification numérique (224) par le système informatique émetteur (200) qui comprend les premiers et deuxièmes attributs reçus ainsi que des données de sécurité cryptographiques du système informatique émetteur (200) qui permettent une validation de la preuve d'identification numérique (224).

15. Système (250) selon l'une des revendications 13 à 14, le système (250) comprenant en outre un système informatique fournisseur d'identification (500), le système informatique fournisseur d'identification (500) étant configuré pour effectuer le premier accès en lecture au premier groupe (312) d'attributs et pour transmettre les premiers attributs (220) lus au système informatique émetteur (200), et/ou
le système (250) comprenant en outre un système informatique d'inspection (600), le système informatique d'inspection (600) étant configuré pour effectuer le deuxième accès en lecture au deuxième groupe (314) d'attributs et pour transmettre les deuxièmes attributs (222) lus au système informatique émetteur (200), et/ou
le système (250) comprenant en outre un terminal (400) du propriétaire du jeton d'identification (300), le terminal (400) étant configuré pour envoyer une demande d'émission pour l'émission de la preuve d'identification numérique (224) au système informatique émetteur (200), l'exécution des instructions de programme (206) par le processeur (208) amenant en outre le système informatique émetteur (200) à envoyer la preuve d'identification numérique (224) émise au terminal (400) en réponse à la demande d'émission.
